# EUROPEAN PATENT APPLICATION

(11) **EP 4 651 557 A2**
(43) Date of publication of application: **19.11.2025**
(21) Application number: 25206456.3
(22) Date of filing: 20.05.2021
(51) Int. Cl.: H04W 28/02

(54) **METHODS FOR SUPPORTING END TO END QOS**

(30) Priority: 20.05.2020 US 202063027646 P; 14.10.2020 US 202063091648 P
(62) Divisional of application: 21732739.4
(71) Applicant: InterDigital Patent Holdings, Inc., Wilmington, DE 19809 (US)
(72) Inventor: RAO, Jaya, Montreal, H3A 3G4 (CA); FREDA, Martino M., Montreal, H3A 3G4 (CA); HOANG, Toung Duc, Montreal, H3A 3G4 (CA); DENG, Tao, New York, 11576 (US); LEE, Moon Il, Melville, NY, 11747 (US)
(74) Representative: AWA Sweden AB

(57) **Abstract**

A method for achieving an end-to-end quality of service (QoS) performed by a wireless transmit/receive unit (WTRU) may include receiving a protocol data unit (PDU) and an excess time indication from a source WTRU, and determining an expected latency for a next hop link based on a measure of channel load. It may also include dynamically determining a next hop latency budget based on the received excess time indication and the expected latency and determining resources for transmitting the received PDU based on the determined next hop latency budget. If the resources are available, the received PDU may be transmitted on the next hop using the determined resources.

## Description

### CROSS REFERENCE TO RELATED APPLICATIONS

This application claims the benefit of U.S Provisional Application No. 63/027,646 filed May 20, 2020 and U.S Provisional Application No. 63/091,648 filed October 14, 2020, which are incorporated by reference as if fully set forth.

### BACKGROUND

New radio (NR) sidelink may focus on supporting vehicle to Vehicle-to-everything (V2X) communication related road safety services. The design provides support for broadcast, groupcast and unicast communications in both out-of-coverage and in-network coverage scenarios. Additionally, sidelink-based relaying functionality can be studied for sidelink/network coverage extension and power efficiency improvement, considering wider range of applications and services.

To further explore coverage extension for sidelink-based communication, in wireless transmit/receive unit (WTRU)-to-network coverage extension, Uu coverage reachability may be necessary for WTRUs to reach server in PDN network or counterpart WTRU out of the proximity area. However, current solutions on WTRU-to-network relay may be limited to Evolved Universal Mobile Telecommunications System (MTS) Terrestrial Radio Access (EUTRA)-based technology, and may not be applied to NR-based systems, for both NG Radio Access Network (NG-RAN) and NR-based sidelink communication.

For WTRU-to-WTRU coverage extension, proximity reachability is currently limited to single-hop sidelink link, either via EUTRA-based or NR-based sidelink technology. However, that may not be sufficient in the scenario where there is no Uu coverage, considering the limited single-hop sidelink coverage.

Sidelink connectivity may be further extended in NR framework, to support enhanced quality of service (QoS) requirements.

### SUMMARY

Methods, systems, and devices are disclosed for determining whether to relay a received PDU from a relay wireless transmit/receive unit (WTRU) to one or more other WTRUs. A method may include receiving information on a first communication range from a source WTRU, the information provided by one of a control channel and within a control indication, determining a second communication range based on the first communication range and a location information of the source WTRU and the relay WTRU, determining that the received information is to be relayed based on the determined second communication range, the first communication range, and a distance threshold, and relaying the information based on determining that the received information is to be relayed.

Methods, systems and devices are also disclosed for determining radio bearer mapping at a remote wireless transmit receive unit (WTRU). A remote WTRU may be configured with mapping configuration information for performing N:1 or 1:N mapping. The remote WTRU may send control information associated with the mapping configurations to a network, or relay WTRU. The remote WTRU may perform mapping at an adaption layer or other equivalent logical function operating in hardware or software. The remote WTRU may perform mapping of logical flows to radio bearers based on a trigger condition. The remote WTRU may receive an indication from a relay WTRU for a change or update in the mapping configuration information.

In accordance with some embodiments of the present disclosure, a method for achieving an end-to-end quality of service (QoS) performed by a wireless transmit/receive unit (WTRU) may include receiving a protocol data unit (PDU) and an excess time indication from a source WTRU, and determining an expected latency for a next hop link based on a measure of channel load. It may also include dynamically determining a next hop latency budget based on the received excess time indication and the expected latency and determining resources for transmitting the received PDU based on the determined next hop latency budget. If the resources are available, the received PDU may be transmitted on the next hop using the determined resources.

In accordance with some embodiments of the present disclosure, a relay wireless transmit/receive unit (WTRU) configured to relay information from a source WTRU to a target WTRU and achieve an end-to-end quality of service (QoS) can include a processor coupled to a transceiver configured to receive a protocol data unit (PDU) and an excess time indication from the source WTRU. The processor coupled to the transceiver may be configured to determine an expected latency for a next hop link based on a measure of channel load, dynamically determine a next hop latency budget based on the received excess time indication and the expected latency, and determine resources for transmitting the received PDU based on the determined next hop latency budget. The processor coupled to the transceiver may be further configured to transmit the received PDU on the next hop using the determined resources, if the resources are available.

### BRIEF DESCRIPTION OF THE DRAWINGS

A more detailed understanding may be had from the following description, given by way of example in conjunction with the accompanying drawings, wherein like reference numerals in the figures indicate like elements, and wherein:
FIG. 1A is a system diagram illustrating an example communications system in which one or more disclosed embodiments may be implemented;
FIG. 1B is a system diagram illustrating an example wireless transmit/receive unit (WTRU) that may be used within the communications system illustrated in FIG. 1A according to an embodiment;
FIG. 1C is a system diagram illustrating an example radio access network (RAN) and an example core network (CN) that may be used within the communications system illustrated in FIG. 1A according to an embodiment;
FIG. 1D is a system diagram illustrating a further example RAN and a further example CN that may be used within the communications system illustrated in FIG. 1A according to an embodiment;
FIG. 2 is a diagram of a user plane radio protocol stack for layer 2 involved WTRU-to-Network relay (PC5);
FIG. 3 is a diagram of a control plane radio protocol stack for layer 2 evolved WTRU-to-Network relay (PC5);
Fig. 4A is a diagram depicting a semi-static configuration of an end-to-end latency budget according to some embodiments;
Fig. 4B is a schematic diagram showing a method for achieving an end-to-end quality of service in accordance with some embodiments; and
Fig. 4C is a diagram depicting a dynamic latency change in accordance with some embodiments.

### DETAILED DESCRIPTION

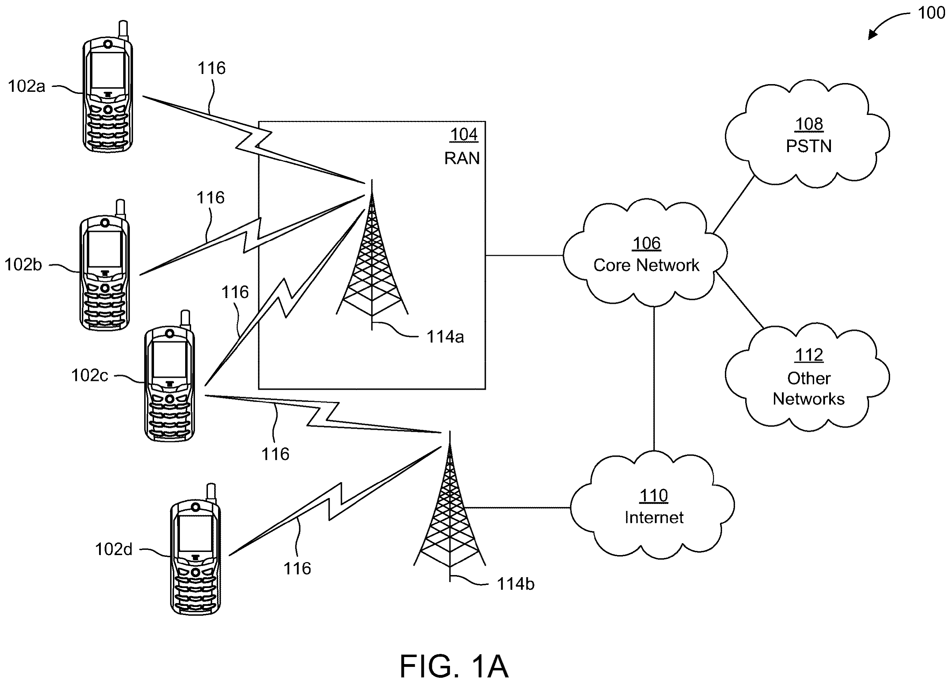

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word discrete Fourier transform Spread OFDM (ZT-UW-DFT-S-OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a radio access network (RAN) 104, a core network (CN) 106, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a station (STA), may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106, the Internet 110, and/or the other networks 112. By way of example, the base stations 114a, 114b may be a base transceiver station (BTS), a NodeB, an eNode B (eNB), a Home Node B, a Home eNode B, a next generation NodeB, such as a gNode B (gNB), a new radio (NR) NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104, which may also include other base stations and/or network elements (not shown), such as a base station controller (BSC), a radio network controller (RNC), relay nodes, and the like. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed Uplink (UL) Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access , which may establish the air interface 116 using NR.

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., an eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106.

The RAN 104 may be in communication with the CN 106, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104 and/or the CN 106 may be in direct or indirect communication with other RANs that employ the same RAT as the RAN 104 or a different RAT. For example, in addition to being connected to the RAN 104, which may be utilizing a NR radio technology, the CN 106 may also be in communication with another RAN (not shown) employing a GSM, UMTS, CDMA 2000, WiMAX, E-UTRA, or WiFi radio technology.

The CN 106 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

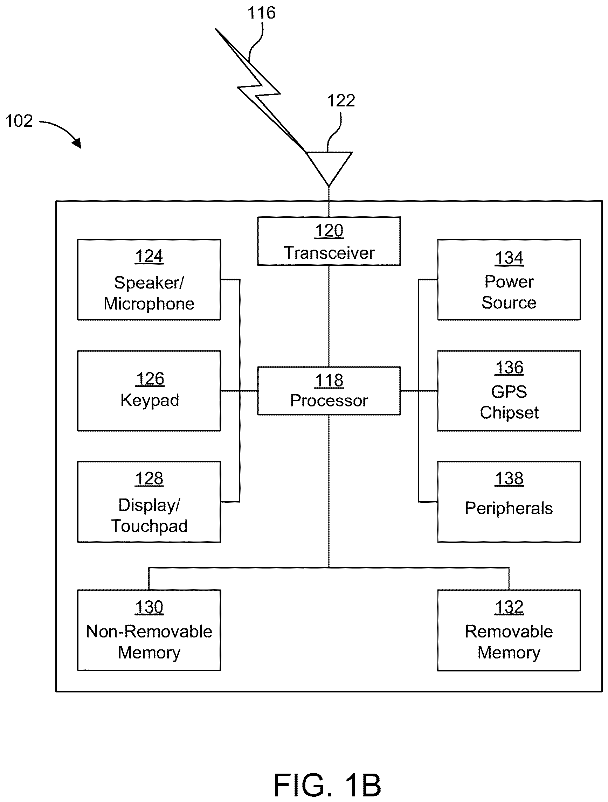

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any subcombination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs), any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors. The sensors may be one or more of a gyroscope, an accelerometer, a hall effect sensor, a magnetometer, an orientation sensor, a proximity sensor, a temperature sensor, a time sensor; a geolocation sensor, an altimeter, a light sensor, a touch sensor, a magnetometer, a barometer, a gesture sensor, a biometric sensor, a humidity sensor and the like.

The WTRU 102 may include a full duplex radio for which transmission and reception of some or all of the signals (e.g., associated with particular subframes for both the UL (e.g., for transmission) and DL (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WTRU 102 may include a half-duplex radio for which transmission and reception of some or all of the signals (e.g., associated with particular subframes for either the UL (e.g., for transmission) or the DL (e.g., for reception)).

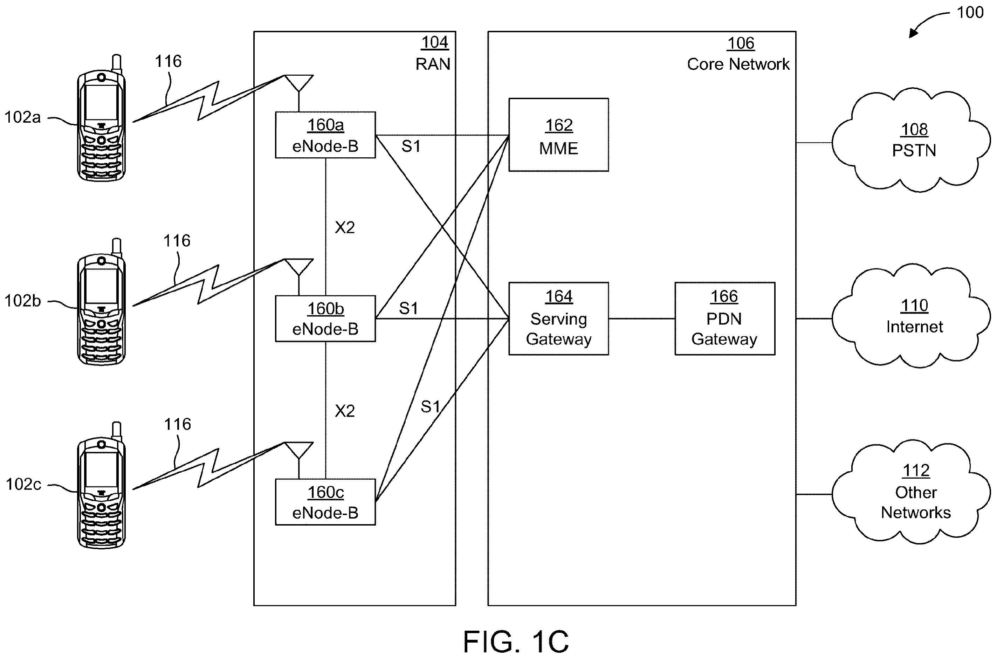

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (PGW) 166. While the foregoing elements are depicted as part of the CN 106, it will be appreciated that any of these elements may be owned and/or operated by an entity other than the CN operator.

The MME 162 may be connected to each of the eNode-Bs 162a, 162b, 162c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional landline communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP. The AP may have access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width. The primary channel may be the operating channel of the BSS and may be used by the STAs to establish a connection with the AP. In certain representative embodiments, Carrier Sense Multiple Access with Collision Avoidance (CSMA/CA) may be implemented, for example in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11af and 802.11ah. The channel operating bandwidths, and carriers, are reduced in 802.11af and 802.11ah relative to those used in 802.11n, and 802.11ac. 802.11af supports 5 MHz, 10 MHz, and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications (MTC), such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode) transmitting to the AP, all available frequency bands may be considered busy even though a majority of the available frequency bands remains idle.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

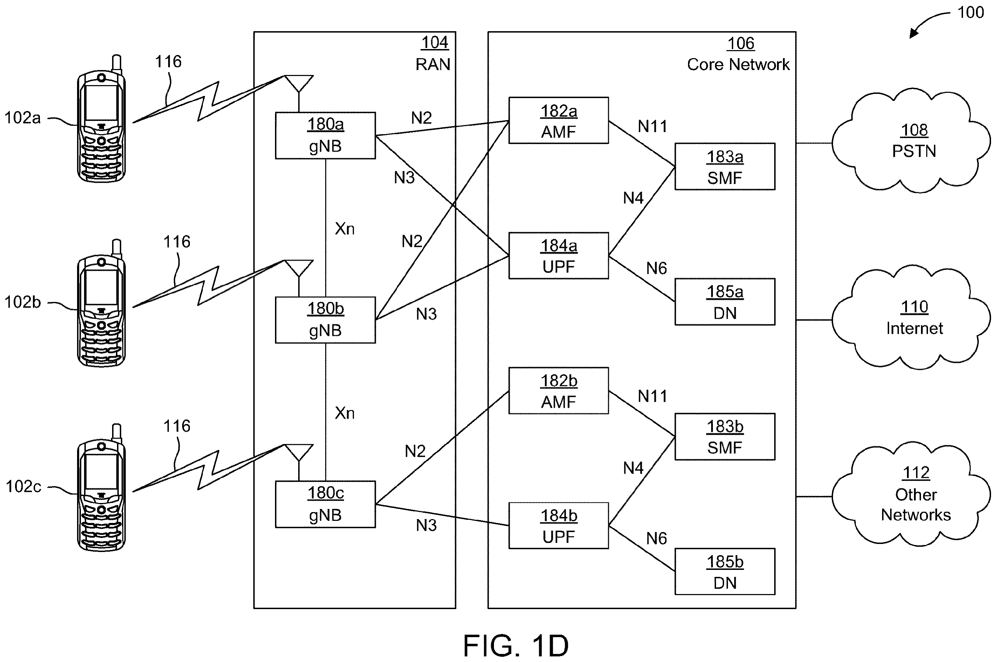

FIG. 1D is a system diagram illustrating the RAN 104 and the CN 106 according to an embodiment. As noted above, the RAN 104 may employ an NR radio technology to communicate with the WTRUs 102a, 102b, 102c over the air interface 116. The RAN 104 may also be in communication with the CN 106.

The RAN 104 may include gNBs 180a, 180b, 180c, though it will be appreciated that the RAN 104 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 108b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., containing a varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, DC, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 106 shown in FIG. 1D may include at least one AMF 182a, 182b, at least one UPF 184a,184b, at least one Session Management Function (SMF) 183a, 183b, and possibly a Data Network (DN) 185a, 185b. While the foregoing elements are depicted as part of the CN 106, it will be appreciated that any of these elements may be owned and/or operated by an entity other than the CN operator.

The AMF 182a, 182b may be connected to one or more of the gNBs 180a, 180b, 180c in the RAN 104 via an N2 interface and may serve as a control node. For example, the AMF 182a, 182b may be responsible for authenticating users of the WTRUs 102a, 102b, 102c, support for network slicing (e.g., handling of different protocol data unit (PDU) sessions with different requirements), selecting a particular SMF 183a, 183b, management of the registration area, termination of non-access stratum (NAS) signaling, mobility management, and the like. Network slicing may be used by the AMF 182a, 182b in order to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for MTC access, and the like. The AMF 182a, 182b may provide a control plane function for switching between the RAN 104 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 106 via an N11 interface. The SMF 183a, 183b may also be connected to a UPF 184a, 184b in the CN 106 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing DL data notifications, and the like. A PDU session type may be IP-based, non-IP based, Ethernet-based, and the like.

The UPF 184a, 184b may be connected to one or more of the gNBs 180a, 180b, 180c in the RAN 104 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering DL packets, providing mobility anchoring, and the like.

The CN 106 may facilitate communications with other networks. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local DN 185a, 185b through the UPF 184a, 184b via the N3 interface to the UPF 184a, 184b and an N6 interface between the UPF 184a, 184b and the DN 185a, 185b.

In view of FIGs. 1A-1D, and the corresponding description of FIGs. 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-b, UPF 184a-b, SMF 183a-b, DN 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

According to implementations of the disclosed subject matter, a WTRU (e.g. relay WTRU) determines whether to relay a received protocol data unit (PDU) to one or more other WTRU(s) (e.g. destination WTRU) based on communication range and at least one of WTRU location(s) (e.g., source and/or relay locations) and a cast type offset distance.

A WTRU (e.g., relay WTRU) may receive information on a first communication range from a source WTRU. Such information may be carried over a control channel (e.g. Sidelink Control Information (SCI)) or within a control indication (e.g. MAC CE or other) in the received PDU. The WTRU may determine a second communication range based on the first communication range and location information of the source WTRU and the relay WTRU.

The relay WTRU may determine the location information of the source WTRU from the zone identifier indicated by the source WTRU in the SCI. The relay WTRU may determine the second communication range by subtracting, from the first communication range, the distance between the source WTRU and relay WTRU (e.g. determined from location information of the source WTRU and the relay WTRU) and an offset distance. For unicast, the offset distance may be determined as a function of the location of the source, relay and destination WTRU. For groupcast, the offset distance may be determined as a function of the number of destination WTRUs in the group and/or based on configuration.

The WTRU also may determine whether to relay the received PDU based on the determined second communication range, the first communication range and a distance threshold. The relay WTRU may relay the received PDU along with the information on the second communication range in SCI if the difference between the first communication range and the second communication range is less than the distance threshold. Alternatively, or additionally, the relay WTRU may drop the PDU and indicate the decision to drop the PDU to the source WTRU.

According to some implementations, a WTRU (e.g. relay WTRU) may determine the resources for relaying a received PDU to one or more WTRUs (e.g. destination WTRU) by performing resource (re)selection based on the resource selection information (e.g., periodicity, offset) received from another WTRU (e.g. source WTRU).

A relay WTRU may receive resource selection information from a source WTRU where the resource selection information includes timing information, for example, periodicity and offset parameters. The relay WTRU may determine resources based on the received resource selection information such that, for example, the relay WTRU (re)selects resources in accordance with or corresponding to (e.g. matching) the received periodicity and/or offset parameters. The relay WTRU may perform resource reselection when the previously selected resources are not in accordance with or corresponding to the received resource selection information

The relay WTRU may relay the received PDU using the determined resources.

Implementations disclosed herein may include the use of both WTRU to network relays and WTRU to WTRU relays based on PC5 (sidelink). New radio (NR) sidelink may focus on supporting vehicle to Vehicle-to-everything (V2X) communication related road safety services. The design may provide support for broadcast, groupcast and unicast communications in both out-of-coverage and in-network coverage scenarios. Additionally, sidelink-based relaying functionality can be studied for sidelink/network coverage extension and power efficiency improvement, considering wider range of applications and services.

To further explore coverage extension for sidelink-based communication, in wireless transmit/receive unit (WTRU)-to-network coverage extension, Uu coverage reachability may be necessary for WTRUs to reach server in PDN network or counterpart WTRU out of the proximity area. However, current solutions on WTRU-to-network relay may be limited to EUTRA-based technology, and may not be applied to NR-based systems, for both NG-RAN and NR-based sidelink communication.

For WTRU-to-WTRU coverage extension, proximity reachability may be currently limited to single-hop sidelink link, either via EUTRA-based or NR-based sidelink technology. However, that may not be sufficient in the scenario where there is no Uu coverage, considering the limited single-hop sidelink coverage.

Sidelink connectivity may be further extended in NR frameworks to support enhanced quality of service (QoS) requirements.

Single hop NR sidelink relays may be explored based on mechanisms with minimum specification impact to support the SA requirements for sidelink-based WTRU-to-network and WTRU-to-WTRU relay, focusing on aspects (if applicable) for layer-3 relay and layer-2 relay [RAN2]. The aspects may include Relay (re-)selection criterion and procedure, relay/remote WTRU authorization, QoS for relaying functionality, Service continuity, security of relayed connection after SA3 has provided its conclusions, and/or impact on user plane protocol stack and control plane procedure, e.g., connection management of relayed connection. Additionally, single hop NR sidelink relays may be explored to support upper layer operations of discovery model/procedure for sidelink relaying, assuming no new physical layer channel / signal [RAN2]. Further input from SA WGs, e.g., SA2 and SA3, for the aspects outlined above may be considered. WTRU-to-network relay and WTRU-to-WTRU relay may use the same relaying solution. Forward compatibility for multi-hop relay support in future releases may need to be taken into account. For layer-2 WTRU-to-network relays, the architecture of end-to-end Packet Data Convergence Protocol (PDCP) and hop-by-hop Radio Link Control (RLC), may be taken as starting point.

Regarding WTRU to network relays, relaying via ProSe WTRU to Network relays can extend network coverage to out of coverage WTRUs by using PC5 (D2D), e.g., between an out of coverage WTRU and a WTRU-to-Network relay. A ProSe WTRU-to-Network Relay may provide a generic L3 forwarding function that can relay any type of IP traffic between the Remote WTRU and the network. One-to-one and one-to-many sidelink communications are used between the Remote WTRU(s) and the ProSe WTRU-to-Network Relay. For both Remote WTRU and Relay WTRU only one single carrier (i.e., Public Safety ProSe Carrier) operation is supported (i.e., Uu and PC5 should be same carrier for Relay/ Remote WTRU). The Remote WTRU may be authorized by upper layers and may be, for example, in-coverage of the Public Safety ProSe Carrier or out-of-coverage on any supported carriers including Public Safety ProSe Carrier for WTRU-to-Network Relay discovery, (re)selection and communication. The ProSe WTRU-to-Network Relay may be always in-coverage of a network, such as an EUTRAN. The ProSe WTRU-to-Network Relay and the Remote WTRU perform sidelink communication and sidelink discovery.

Regarding relay selection for WTRU to NW relays, relay selection/reselection for ProSe WTRU to NW relays may be performed based on combination of a AS layer quality measurements (RSRP) and upper layer criteria. A nodeB may control whether the WTRU can act as a ProSe WTRU-to-Network Relay. If the eNB broadcasts any information associated to ProSe WTRU-to-Network Relay operation, then ProSe WTRU-to-Network Relay operation is supported in the cell. The nodeB may provide transmission resources for ProSe WTRU-to-Network relay discovery using broadcast signaling for RRC_IDLE state and dedicated signaling for RRC_CONNECTED state, reception resources for ProSe WTRU-to-Network Relay discovery using broadcast signaling, the nodeB, such as an eNB, gNB, or a network node that uses any other radio access technology, may broadcast a minimum and/or a maximum Uu link quality (RSRP) threshold(s) that the ProSe WTRU-to-Network Relay needs to respect before it can initiate a WTRU-to-Network Relay discovery procedure. In RRC_IDLE, when the nodeB broadcasts transmission resource pools, the WTRU may use the threshold(s) to autonomously start or stop the WTRU-to-Network Relay discovery procedure. In RRC_CONNECTED, the WTRU uses the threshold(s) to determine if it can indicate to nodeB that it is a Relay WTRU and wants to start ProSe WTRU-to-Network Relay discovery. If the nodeB does not broadcast transmission resource pools for ProSe-WTRU-to-Network Relay discovery, then a WTRU can initiate a request for ProSe-WTRU-to-Network Relay discovery resources by dedicated signaling, respecting these broadcasted threshold(s).

If the ProSe-WTRU-to-Network Relay is initiated by broadcast signaling, it can perform ProSe WTRU-to-Network Relay discovery when in RRC_IDLE. If the ProSe WTRU-to-Network Relay is initiated by dedicated signaling, it can perform relay discovery as long as it is in RRC_CONNECTED.

A ProSe WTRU-to-Network Relay performing sidelink communication for ProSe WTRU-to-Network Relay operation may be in RRC_CONNECTED. After receiving a layer-2 link establishment request or TMGI monitoring request (upper layer message) from the Remote WTRU, the ProSe WTRU-to-Network Relay indicates to the eNB that it is a ProSe WTRU-to-Network Relay and intends to perform ProSe WTRU-to-Network Relay sidelink communication. The nodeB may provide resources for ProSe WTRU-to-Network Relay communication.

The remote WTRU can decide when to start monitoring for ProSe WTRU-to-Network Relay discovery. The Remote WTRU can transmit ProSe WTRU-to-Network Relay discovery solicitation messages while in RRC_IDLE or in RRC_CONNECTED depending on the configuration of resources for ProSe WTRU-to-Network Relay discovery. The nodeB may broadcast a threshold, which may be used by the Remote WTRU to determine if it can transmit ProSe WTRU-to-Network Relay discovery solicitation messages, to connect or communicate with ProSe WTRU-to-Network Relay WTRU. The RRC_CONNECTED Remote WTRU may use the broadcasted threshold to determine if it can indicate to nodeB that it is a Remote WTRU and wants to participate in ProSe WTRU-to-Network Relay discovery and/or communication. The nodeB may provide, transmission resources using broadcast or dedicated signaling and reception resources using broadcast signaling for ProSe WTRU-to-Network Relay Operation. The Remote WTRU stops using ProSe WTRU-to-Network Relay discovery and communication resources when Reference Signal Received Power (RSRP) goes above the broadcasted threshold. An exact time of traffic switching from Uu to PC5 or vice versa may be up to a higher layer.

The Remote WTRU may perform radio measurements at PC5 interface and use them for ProSe WTRU-to-Network Relay selection and reselection along with higher layer criterion. A ProSe WTRU-to-Network Relay may be considered suitable in terms of radio criteria, for example, if the PC5 link quality exceeds configured threshold (pre-configured or provided by nodeB). The Remote WTRU selects the ProSe WTRU-to-Network Relay, which satisfies higher layer criterion and has the best PC5 link quality among all suitable ProSe WTRU-to-Network Relays.

The Remote WTRU may trigger ProSe WTRU-to-Network Relay reselection when a PC5 signal strength of current ProSe WTRU-to-Network Relay is below a configured signal strength threshold and/or when it receives a layer-2 link release message (upper layer message) from ProSe WTRU-to-Network Relay.

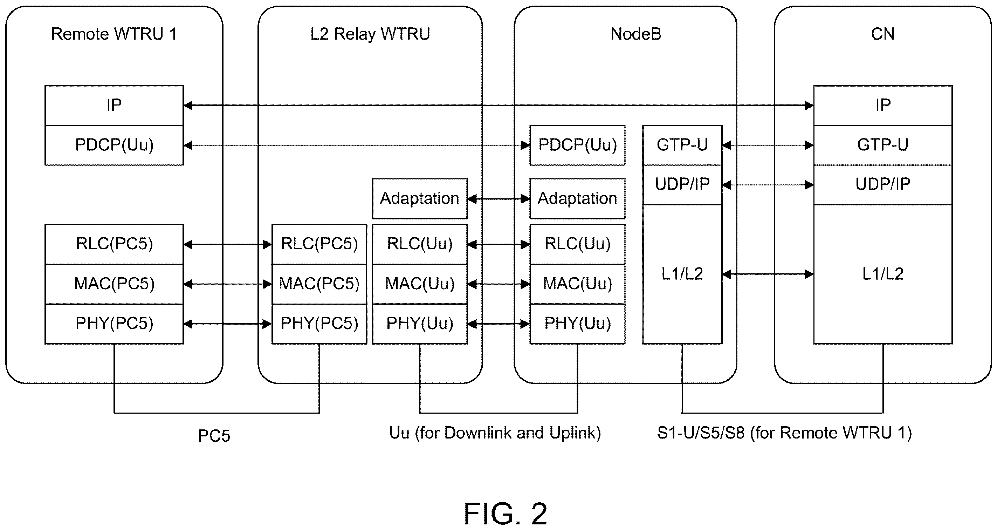

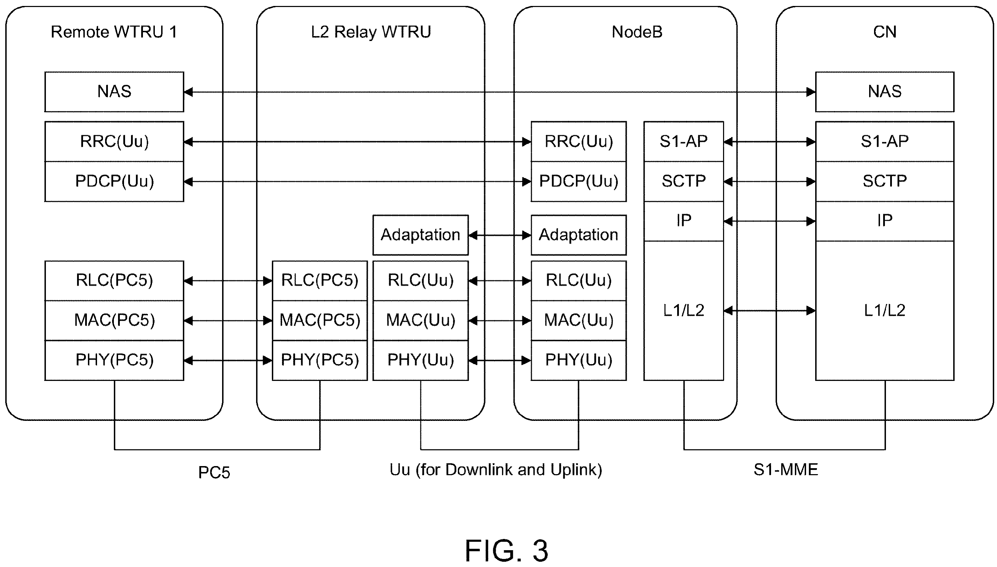

Regarding WTRU to network relays for wearables, WTRU to NW relays for commercial use cases tailored to wearables and loT devices may be observed in RAN. Contrary to ProSe WTRU to NW relays which may use a L3 (IP layer) relaying approach, the WTRU to NW relays for wearables may be expected to be a L2 relay based on the protocol stacks shown in FIG. 2 and FIG. 3. FIG. 2 shows a user plane radio protocol stack for layer 2 involved WTRU-to-Network relay (PC5). FIG. 3 shows a control plane radio protocol stack for layer 2 evolved WTRU-to-Network relay (PC5)

Procedures for connection establishment for unicast links in NR V2X are disclosed herein. Traditional solutions may be based on a one to one communication link established at upper layers (ProSe layer) between two WTRUs (the remote WTRU and WTRU to NW relay). Such connection may be transparent to the AS layer and connection management signaling and procedures performed at the upper layers are carried by AS layer data channels. The AS layer may be unaware of such a one to one connection.

In NR V2X, the AS layer may support the notion of a unicast link between two WTRUs. Such unicast link is initiated by upper layers (as in the ProSe one-to-one connection). However, the AS layer is informed of the presence of such unicast link, and any data that is transmitted in unicast fashion between the peer WTRUs. With such knowledge, the AS layer can support hybrid ARQ (HARQ) feedback, Channel Quality Indicator (CQI) feedback, and power control schemes which are specific to unicast. A unicast link at the AS layer is supported via a PC5-RRC connection.

The PC5-RRC connection may be defined as being a logical connection between a pair of a Source Layer-2 ID and a Destination Layer-2 ID in the AS. One PC5-RRC connection is corresponding to one PC5 unicast link. The PC5-RRC signaling may be initiated after its corresponding PC5 unicast link establishment. The PC5-RRC connection and the corresponding sidelink SRBs and sidelink DRBs are released when the PC5 unicast link is released as indicated by upper layers.

For each PC5-RRC connection of unicast, one sidelink SRB may be used to transmit the PC5-S messages before the PC5-S security has been established. One sidelink SRB may be used to transmit the PC5-S messages to establish the PC5-S security. One sidelink SRB may be used to transmit the PC5-S messages after the PC5-S security has been established, which is protected. One sidelink SRB may be used to transmit the PC5-RRC signaling, which is protected and only sent after the PC5-S security has been established.

PC5-RRC signaling may include a sidelink configuration message (RRCReconfigurationSidelink) where one WTRU configures the RX-related parameters of each SLRB in the peer WTRU. Such reconfiguration message can configure the parameters of each protocol in the L2 stack (SDAP, PDCP, etc). The receiving WTRU can confirm or reject such configuration, depending on whether it can support the configuration suggested by the peer WTRU.

WTRU-to-WTRU relays may be a candidate topic for discussion and further development. One aspect of WTRU-to-WTRU relays is the ability to satisfy higher layer QoS requirements (e.g. PQI, communication range) on an end-to-end (E2E) basis when transmitting in the AS layer via one or more relay WTRUs.

Ensuring QoS on the sidelink may be primarily under the control of the transmitting WTRU. The transmitting WTRU may configure the SLRB sublayers/parameters (e.g. resource selection window, HARQ configuration) and control the transmissions such that the QoS requirements of all packet flows carried by the SLRB are satisfied. The receiving WTRU has no control over how the QoS is ensured. When including a relay WTRU for forwarding the packet flows over multi-hop links, relying only on the transmitting WTRU or source WTRU may not be adequate for ensuring E2E QoS due to the unawareness of the link conditions/congestion in the subsequent hops at the source WTRU.

Additionally, if a L2 relay is adopted for the WTRU-to-WTRU relaying, the protocol stack including the lower layers (RLC, MAC) may hide the E2E QoS parameters from the relay WTRU, which may limit the capability of the relay WTRU to fulfil the QoS requirements when transmitting in the subsequent hops.

Enhancements may be necessary in the multi-hop SLRB design used in WTRU-to-WTRU relaying as well as the behavior of the source WTRU and relay WTRU(s) such that the flows can be seamlessly forwarded without incurring further latency/losses.

Techniques for supporting E2E QoS in WTRU to WTRU relaying are disclosed herein. Techniques for determining SLRB configuration in WTRU to WTRU relaying to ensure E2E QoS are further disclosed herein. A WTRU may be configured with rules to map a higher layer data flow to a relayed vs non-relayed SLRB. According to an implementation, a WTRU may determine whether to map a higher layer data flow to an SLRB configured with a relay or configured without a relay WTRU based on reception of a higher layer marking/flag. Specifically, the WTRU may perform the mapping/multiplexing in the SDAP sublayer of one or more higher layer flows to an SLRB that is configured to achieve a QoS performance in the access stratum (AS) layer that is equivalent to higher layer 5QI. The WTRU may be configured with two SLRB types including a first type which includes an end-to-end direct path between a source WTRU and a destination WTRU and another type which includes a relayed path via one or more relay WTRUs.

The WTRU may be configured with mapping rules in SDAP for mapping between flows to SLRB type based on marking in the higher layer PDUs (e.g. in the higher layer PDU header). The mapping rule may include detecting the marking/flag in the higher layer PDUs and identifying a suitable SLRB in the AS layer. The mapping rules may include additional rules for allowing/prohibiting the mapping of certain flows to SLRBs that may include relay WTRU in the end-to-end path. For example, the rule may include detecting a marker/flag in the higher layer PDU. The marker indicating the inclusion/exclusion of a relay WTRU may be either indicated in the QoS profile or as an additional parameter in the higher layer PDU, or determined implicitly from the QoS profile. In this case, the WTRU selects an SLRB configured with or without a relay WTRU for a data flow (QFI) based on detecting of the marker/flag. For example, a WTRU may be (pre)configured (e.g. in SIB/preconfiguration/dedicated signaling) with a mapping of allowable QoS profile(s) and/or QFI to SLRB type (relayed vs non-relayed).

A WTRU may be configured to relay and indicate the allowable path type on its transmissions. The WTRU may send an indication to a relay WTRU for enabling the relay WTRU to determine whether to relay or not to relay data. Such indication may be sent in a control channel (e.g. SCI) or in a control indication (e.g. MAC CE) within the transmitted data. Such indication may be obtained from upper layers such as via RRC or MAC signaling or any other logical equivalent (e.g. for the source WTRU). Such indication may be derived by the WTRU from a corresponding such value configured in the WTRU and/or received in a transmission to be relayed (e.g. for the relay WTRU). For example, a relay WTRU configured with a maximum hop count may receive a remaining hop count in the indication and may determine the hop count to be transmitted based on the corresponding remaining hop count (e.g. subtract 1, or reuse the same value). A WTRU may further include such maximum/remaining hop count or allowable path type information only when transmitting to a WTRU that is itself a relay WTRU for the intended transmission.

A similar solution may be implemented at a relay WTRU. Specifically, a relay WTRU may determine whether to relay a received sidelink data over a direct path or a relayed path. The WTRU may make such decision based on an indication/information received, such as the QoS profile and/or QFI (in which case, the decision is similar to the source WTRU), an explicit indication (relay or not relay), for example included in the header of an SDU (e.g. RLC, MAC, etc), or a maximum hop count or allowable number of remaining hops. For example, a relay WTRU may relay an SDU if the received remaining maximum hop count is larger than some value (e.g. 0), otherwise it should relay over a direct path. As another example, a relay WTRU may relay an SDU if the received maximum hop count is larger than a number of hops for such path (possible obtained from upper layers).

A WTRU may determine/send the AS layer configuration for next hop WTRU(s). According to implementations, a WTRU configured with an end-to-end SLRB may determine the lower layer configuration, consisting of RLC, MAC, and possibly PHY configurations, to be applied in the relay WTRUs for ensuring end-to-end QoS. In one example, the lower layer configuration applied at the relay WTRU may include PDCP, RLC, MAC and PHY configurations. The lower layer configuration may include at least one configuration including i) PDCP configuration which may include parameters associated with sequence number (SN) size, discard timer, packet duplication, ii) RLC configuration which may include parameters associated with acknowledged mode and/or unacknowledged mode, LCH-to-LCH mapping rules when mapping between ingress RLC entities (Transmitting (TX) side) and egress RLC entities (Receiving (RX) side), iii) MAC configuration which may include logical channel prioritization (LCP) restrictions, discontinuous reception (DRX) configuration, parameters associated with LCH configuration for one or more LCHs including priority, prioritized bit rate, bucket size duration and/or iv) PHY configuration which may include resource pool configuration, channel state information (CSI) reporting configuration, HARQ configuration. In another example, a lower layer configuration may consist of one or more logical channels (LCHs) consisting of RLC entity and the associated LCH configuration at MAC. The WTRU may be configured to determine the lower layer configuration for itself and/or one or more next hop relay WTRUs.

A WTRU may update the parameters associated with lower layer configuration for relay WTRU. According to an implementation, the WTRU may determine the configuration parameters of the lower layers of the next hop WTRUs in the SLRB. A WTRU may be configured with a set of default parameters and/or a set of allowed configuration parameters that can be modified and updated at different entities of the lower layers (RLC, MAC, PHY). A WTRU may also be configured with certain range values (e.g. maximum and minimum) for which the parameters at the lower layers are allowed to be modified. For example, the different LCH parameters including priority, PBR and BSD may be configured with certain maximum and a minimum range for which a source WTRU and/or a next-hop/relay WTRU may be allowed to change.

A WTRU may select a lower layer configuration for relay WTRU from multiple pre-configurations. According to an implementation, a WTRU may select a lower layer configuration for WTRUs from multiple lower layer (pre)configurations. For example, a WTRU may select the lower layer configuration for its egress LCH and/or at the egress LCHs of one or more next hop WTRUs. When selecting a lower layer configuration, the parameters in the RLC entity and MAC entity associated with an LCH may be updated in accordance with or to correspond to (e.g. to match) that of the selected lower layer configuration, for example. In another example, the RLC and MAC entities may be associated with a primary lower layer configuration as well as with one or more secondary lower layer configurations, where different configurations may correspond to different parameters applied at the RLC and MAC entities. The primary (default) and secondary lower layer configurations may be preconfigured in the WTRUs associated with the SLRB during the (re)configuration. The different configurations may be identified with an identifier, which may be used by a WTRU when selecting/indicating/activating/deactivating a lower layer configuration. In this case, the primary (default) configuration may be activated initially during (re)configuration while the secondary configurations may be deactivated, for example.

A WTRU may send multiple pre-configurations to the relay WTRU(s) and the relay WTRU(s) selects its configuration. According to an implementation, a WTRU may receive multiple lower layer configurations for a relay WTRU and may send all or a subset of such multiple lower layer configurations to the relay WTRU. The relay WTRU may be configured with a rule to select one of the received lower layer configurations based on measurements at the WTRU, or received from a peer WTRU, such as CBR, CR, CQI, RSRP, etc., based on buffer occupancy (e.g. in the RLC) at the WTRU, based on a number of configured unicast links or bearers the WTRU is currently relaying, possibly with the same source WTRU, or for any/all source WTRUs, and/or based on a number of hops of the relayed path for the SLRB.

For example, a WTRU may be configured with a rule to select one of the lower-layer configurations received from the source WTRU (or previous WTRUs) based on the number of configured SLRBs currently being relayed by the WTRU.

A WTRU may forward a subset of received configurations to the next hop based on selection of its own configuration. According to an implementation, a WTRU may select a subset of the received configurations (intended for itself and/or the next hop WTRU) to be sent to the next hop WTRU based on its own configuration selection. Specifically, a WTRU may be configured with a rule for which selection of its own configuration excludes the use of another configuration by the next hop WTRU. Such rule may be based on the relation between one or more parameters of the configuration and/or alignment of such parameters with the next hop WTRU. For example, a WTRU may exclude all configurations with HARQ disabled for use by the next hop if the WTRU selects a configuration with HARQ enabled.

Triggers/indications received by a WTRU for updating its or another WTRUs lower layer configuration are provided herein. A WTRU may update its own lower layer configuration or the lower layer configuration in one or more WTRUs associated with an SLRB based on an indication from Network. For example, the network may send an indication (e.g. dedicated RRC signaling or SIB) for changing the lower layer configuration, which may include the values of the parameters of different entities to be changed. The network may send the indication for changing lower layer configuration in the SLRB to one or more WTRUs with an RRC connection to a network node (e.g. source WTRU and/or a relay WTRU). The network may also indicate to a WTRU to change in the lower layer configuration in another WTRU configured with the SLRB.

A WTRU may update its own lower layer configuration or the lower layer configuration in one or more WTRUs associated with an SLRB based on lower layer status and measurements. The status information received from the lower layers may be used to update the lower layer configuration. For example, the WTRU may be configured to receive status information from lower layers related to the performance of the configured one or more lower layer configurations in itself. In this case, different sublayers/entities in the lower layers may be configured with periodic or event-based triggers to send status information to the WTRU due to the following triggers:

A WTRU may update its own lower layer configuration or the lower layer configuration in one or more WTRUs associated with an SLRB based on RLC status information. For example, the RLC entity may be configured to send status information and/or change a configuration when the number of ARQ retransmissions to a peer WTRU exceed a certain value.

A WTRU may update its own lower layer configuration or the lower layer configuration in one or more WTRUs associated with an SLRB based on MAC status information. The MAC entity may be configured to send a status information and/or change a configuration upon detecting a maximum HARQ feedback failures from a next hop relay WTRU, for example.

A WTRU may update its own lower layer configuration or the lower layer configuration in one or more WTRUs associated with an SLRB based on PHY status information. The PHY layer may be configured to provide status information and/or change a configuration due to an event trigger, for example, when channel measurements (e.g. RSRP, CSI feedback) and/or CBR measurements pertaining to the resource pools or sidelink carriers in the immediate link exceed certain threshold.

A WTRU may update its own lower layer configuration or the lower layer configuration in one or more WTRUs associated with an SLRB based on buffer occupancy information associated with one or more layers (e.g. RLC, MAC, PHY). For example, a WTRU may be configured to send status information and/or change a configuration when the buffer occupancy or channel occupancy (e.g. CR) exceeds a threshold.

A WTRU may be configured with a first lower layer configuration and a second lower layer configuration and a rule for determining a lower layer configuration based on a status indication. In this case, the WTRU may change to the second lower layer configuration if a status indication (e.g. number of HARQ feedback failures) is received when using the first lower layer configuration, for example.

The status indication may be a higher layer status. For example, the higher layers (e.g. PC5-RRC, or any other logical equivalent) may trigger reconfiguration of one or more lower layers in the WTRU due to possible reconfiguration of one or more SLRBs associated with WTRU. The reconfiguration of SLRB may include modifying an existing SLRB, adding another SLRB (e.g. for transporting the PDU belonging to an existing or new QFls), terminating an existing SLRB. The reconfiguration of SLRB may trigger the modification of one or more lower layer configurations associated with the existing SLRBs.

The status indication may be an indication from relay/next hop WTRU. For example, the existing lower layer configuration may be changed if an indication from the next hop relay WTRU received indicating a change in the existing conditions at the relay WTRU and/or next hop link. In this case, the changing conditions at the relay WTRU and next hop link may be inferred as inability to satisfy the target QoS requirements at one or more links. For example, the conditions at the relay WTRU that may trigger an indication may include reaching a threshold value at a buffer associated with a LCH. Likewise, the conditions related to next hop link that may trigger an indication may include channel measurements values (e.g. RSRP, CSI) and/or congestion level (e.g. CBR) respectively exceed different threshold values, for example.

Indications sent by a WTRU for updating the lower layer configuration are disclosed herein. Upon determining the update to the lower layer configuration, a WTRU may send the new configuration individually to each relay WTRU configured with the SLRB. Alternatively, the WTRU may send the new configuration (e.g. via groupcast/broadcast) simultaneously to one or more relay WTRUs configured with the SLRB (e.g. identified by the L2 source/destination ID) by including the relay WTRU ID(s) (i.e. an identifier associated to the relay WTRU) in the message. The indication message to update the lower layer configuration at a relay WTRU may include parameters to be applied in a lower layer configuration (e.g. ingress/egress LCH), identifier/index of the selected lower layer configuration (e.g. LCH ID), and/or time duration to apply an indicated lower layer configuration. For example, an indicated lower layer configuration may be applied at a relay WTRU in the first slot of the indication time duration. After the last slot of the indicate time duration, the relay WTRU may change the lower layer configuration to a previous (default) configuration. Alternatively, a WTRU may be configured with a lower layer configuration that may be applied for a time duration following a detection of a failure event/condition (e.g. RLF on a link). After the expiration of the time duration, the WTRU may apply the previous lower layer configuration.

The WTRU may send the indication related to the update of a lower layer configuration in SCI, MAC CE, PC5-RRC, and/or RRC, or any other logically equivalent signal or message. In SCI, for example, the WTRU may send the indication either the first stage SCI or second stage SCI. The WTRU may use a dedicated resource (e.g. PSFCH) when sending the indication in SCI. In a MAC CE, for example, the WTRU may send the indication in a SL MAC CE to the next hop relay WTRU. In PC5-RRC, For example, the WTRU may send the indication in an SL-SRB to the next hop relay WTRU. In RRC, for example, a WTRU may send an indication to the network in an RRC message (e.g. WTRU assistance information). The indication to the network may include the L2 source/destination ID corresponding to the end-to-end SLRB and the relay WTRU IDs. Indications may be sent to the next hop relay WTRU via another logically equivalent message or transmission.

A WTRU may send an indication to network to request to update a lower layer configuration in a relay WTRU. According to an implementation, a WTRU may send a request to the network requesting to update the lower layer configuration at one or more WTRUs, indicated in the request and/or associated with an SLRB. The WTRU may send the request in an RRC message (e.g. "sidelinkWTRUlnformation"), or any other logical equivalent, either for obtaining the parameters of the indicated lower layers or for obtaining the identifier/index of lower layer configuration for the indicated WTRUs. Alternatively, the request may include measurement reports (e.g. per-link latency, RSRP, CBR, HARQ statistics) that may be used by the network to determine a lower layer configuration that satisfies a target QoS performance.

A WTRU may include, in the request for determining the lower layer configuration, L2 source/destination IDs, LCH IDs, measurements reported by lower layers, and/or QoS related attributes. A L2 source/destination ID may be for indicating the end-to-end SLRB between a source WTRU and destination WTRU. In the case when the SLRB is associated with different L2 IDs, the L2 ID associated with each unicast link between any two peer WTRUs in the end-to-end path (e.g. source WTRU to relay WTRU, relay WTRU to destination WTRU) may also be included. LCH IDs of one or more LCHs configured to the SLRB may be included. Measurements (e.g. number of HARQ/RLC retransmissions, CBR) reported by lower layers associated with the indicated egress LCHs in the WTRU and/or next hop WTRUs may be included. And, QoS related attributes (e.g. per-link latency, packet error rate) reported by next hop WTRU associated with the indicated ingress LCHs may be included.

A WTRU may be configured with triggers for sending the indication to the network, related to measurements at the WTRU of the QoS related attributes described above.

A relay WTRU may determine the lower layer configuration based on a received indication for triggering configuration update. According to an implementation, a relay WTRU determines the lower layer configuration to apply in the ingress side (Rx) and/or egress side (Tx) of the WTRU based on an indication received from another WTRU or the network.

The relay WTRU may determine the lower layer configuration to be applied based on the information contained in the received indication. The received indication may be an indication from a source WTRU/previous hop WTRU on lower layer configuration. For example, a source WTRU may indicate the update to the configuration parameters or the identifier of a lower layer configuration selected to be applied at the ingress side (Rx side) associated with the SLRB to match the parameters applied the egress side (Tx side) of the source WTRU. The source WTRU may also indicate the lower layer configuration parameters/identifier to be applied at the egress side (Tx side) associated with the SLRB in the relay WTRU. The indication from the source WTRU/previous hop WTRU containing the parameters/identifier of lower layer configuration to update an ingress/egress side may be sent in SCI, SL MAC CE or PC5-RRC or any other logical equivalent.

The received indication may be an indication from source WTRU/previous hop WTRU on QoS information. For example, the indication from a previous hop WTRU may contain the parameters related to the remaining QoS (e.g. latency, reliability) for the relay WTRU to take into consideration when determining/selecting a lower layer configuration for subsequent hops. In this case, the relay WTRU may use a rule configured with one or more criterions for determining the lower layer configuration based on the received QoS parameter. As an example, the relay WTRU, which may be configured with a first lower layer configuration and a second lower layer configurations, may select the first lower layer configuration if the received QoS related indication (e.g. remaining PDB is within a first range) satisfies a first criterion. Otherwise, the relay WTRU may select the second lower layer configuration if the QoS related indication (e.g. remaining PDB within a second range) satisfies a second criterion.

The received indication may be an indication from a network. For example, a relay WTRU in coverage may receive an indication containing the parameters/identifier of a lower layer configuration from network either in DCI or RRC message to update the lower layer configuration.

The received indication may be an indication from destination WTRU/next hop WTRU. For example, if the relay WTRU receives a trigger (RLC/HARQ feedback) that may be inferred as an inability to meet a target QoS performance (e.g. increase in per latency, reduction in per link reliability) from the next hope WTRU, the relay WTRU may update the lower layer configuration at the egress side.

The received indication may be a change in buffer status in one or more LCHs. For example, the relay WTRU may update the configuration of an LCH if the data in the buffer belonging to other LCHs with higher priority setting exceed certain configured threshold.

The received indication may be a lower layer status. For example, the if relay WTRU receives status reports from lower layer (e.g. channel measurement report, RSRP, CBR) related to the resource pool/sidelink carrier configured to a lower layer configuration, based on which the QoS performance can be possibly inferred, the relay WTRU may update the lower layer configuration.

The received indication may be an indication from adaptation layer. For example, the relay WTRU may be triggered by the adaptation layer to change the lower layer configuration in one or more lower layers if the mapping between different lower layers at the ingress side and egress side is updated.

After determining the update to the lower layer configuration to be applied at the egress side, the relay WTRU may send an indication containing the status of updating the lower layer configuration, modification of the lower layer configuration relay WTRU, and modification in the LCH mapping at the relay WTRU.

The relay WTRU may send an indication containing a status of updating the lower layer configuration based on the received trigger: For example, if the relay WTRU receives an indication containing the configuration parameters/identifier of an lower layer configuration, the relay WTRU may respond by indicating the success or failure status of updating the indicated configuration. The relay may send the lower layer configuration update status information (including configuration identifier or LCH ID) either in PC5-RRC, SL MAC CE or SCI to the source WTRU which is associated with the SLRB and configured with an L2ID between the source and relay WTRU. The relay WTRU may send the status information in response to a poling request sent by the source WTRU inquiring the status of the lower layer configuration update, for example. Alternatively, the relay WTRU may send the status information either in RRC or MAC CE to the network by including the L2ID and/or LCH ID. The received indication from the relay WTRU may be used by the source WTRU or network to report the status of configuration update to upper layers, for example.

The relay WTRU may send an indication containing modification of the lower layer configuration relay WTRU. For example, if the relay WTRU determines the parameters/identifier of an lower layer configuration which is possibly different from the parameters/identifier indicated in the received indication, the relay WTRU may send an indication to either the source WTRU or network the updated lower later configuration parameters/identifier applied at the relay WTRU for the associated SLRB.

The relay WTRU may send an indication containing modification in the LCH mapping at relay WTRU. For example, if updating of the lower layer configuration triggers a modification of the mapping between ingress LCHs and egress LCHs, the relay WTRU may send an indication containing the updated mapping and/or updated lower layer configuration to the network or source WTRUs associated with the one or more SLRBs configured at the relay WTRU and affected by the change in the LCH mapping.

Solutions for determining relaying for WTRU to WTRU Relay with an E2E communication range are disclosed herein.

A Relay WTRU may determine the decision for relaying to the destination WTRU based on the end-to-end communication range. According to some implementations, a relay WTRU may determine the decision for relaying the received PDU to a next destination WTRU as a function of the received communication range, and possibly other location information. In some examples, the relay WTRU may determine whether to relay a received PDU based on the range requirement indicated in the SCI and the relative location(s) of the source WTRU and/or the destination WTRU and/or the relay WTRU. For example, a relay WTRU may relay data if the distance to the destination WTRU is below or equal to the end-to-end communication range requirement. For example, a relay WTRU may relay data if the communication range is larger than the sum of the distances between the source WTRU and relay, and the relay WTRU and destination. In another example, a hop count may be applied to infer the end-to-end communication range where each hop may be associated with a certain per-hop range and the sum of the allowed number of hops may be determined as end-to-end communication range divided by the per-hop range. In this example, a relay WTRU may relay data if the remaining hop count to a destination WTRU is lower than a maximum hop-count requirement.

To determine the decision for relaying, a relay WTRU may perform all or a subset of determining the end-to end range or hop count requirement, the distance from source WTRU to relay WTRU, the distance to the destination WTRU, the offset distance of relay WTRU, and/or an updated communication range from relay WTRU.

A relay WTRU may determine the end-to-end range or hop count requirement. For example, the relay WTRU may identify the end-to-end range or hop count based on range or hop count value indicated in a control channel (e.g. SCI) or within a control indication (e.g. MAC CE) sent along with the data by the source WTRU to the relay WTRU. Alternatively, the relay WTRU may identify the end-to-end range, possibly from a default configuration value included when configuring the associated LCH/SLRB at the relay WTRU.

A relay WTRU may determine the distance from source WTRU to relay WTRU. For example, the relay WTRU may determine the distance in the first hop link based on the geographic zone/location information indicated in the SCI transmitted along with the data by the source WTRU. According to this implementation, the distance to the source may be determined based on the difference between the location of the source WTRU and the relay WTRU, for example.

A relay WTRU may determine the distance to the destination WTRU. For example, the distance to a destination WTRU may be determined based on the link status information on the second hop link. The link status information may be obtained by the relay WTRU based on request messages, such as polling request, HARQ feedback or CSI report, sent to the destination WTRU. The destination WTRU may include its location information in the SCI, for example, when sending the response/feedback message to the relay WTRU. Alternatively, the destination WTRU may periodically send its location information to a relay WTRU using, for example, PC5-RRC message, RRC message, another logically equivalent message, or regular data transmissions.

According to an implementation, a relay WTRU may determine whether to relay a message based on only the range requirement and the distance between the source and relay WTRU (i.e. without knowledge of the destination WTRU). For example, a relay WTRU may decide to relay a message if the distance between the source WTRU and relay WTRU is smaller than the communication range, possibly by some (pre)configured offset value.

A relay WTRU may determine the offset distance of a relay WTRU. For example, the relay WTRU may determine an offset distance to account for the location of the relay WTRU relative to a direct path connecting the source WTRU and destination WTRU.

For unicast, the offset distance may be determined as a function of the distance between the source WTRU and the relay WTRU and the angle with respect to the direct path connecting the source WTRU and destination WTRU and the relayed path connecting the source WTRU and relay WTRU. For example, the offset distance d2 may be determined as d2 = d1 x cos θ, where d1 is the distance between source/previous-hop WTRU and relay WTRU and θ is the angle between direct path (e.g. connecting source WTRU and destination WTRU) and relayed path (e.g. connecting source WTRU and relay WTRU). The information on the angle may be carried over a control channel (e.g. SCI) or within a control indication (e.g. MAC CE) in the PDU received from the source WTRU, as an example. In another example, the offset distance for unicast may be applied if the determined offset distance value is equal to or above a configured threshold.

For groupcast, the offset distance may be determined as a function of one or more of the number of destination WTRUs in a group, locations of one or more destination WTRUs in the group, and/or higher layer indication or network configuration.

A relay WTRU may determine an updated communication range from a relay WTRU. For example, the WTRU may subtract from the received communication range (in SCI) the distance between itself and the received WTRU. The WTRU may further round the value determined from such subtraction to a larger/smaller allowed communication range value

Based on the items listed herein, the criteria for relaying may be that a relay WTRU may decide to relay data if the received range requirement is larger than the distance between the source WTRU and the destination WTRU, that a relay WTRU may decide to relay data if the received range requirement is at least some delta (positive or negative) larger than the distance between the source WTRU and the destination WTRU, that a relay WTRU may decide to relay data if the received range requirement is larger than the distance between the source WTRU and the relay WTRU itself, that a relay WTRU may decide to relay data if the received range requirement is at least some delta (positive or negative) larger than the distance between the source WTRU and the relay WTRU itself, that a relay WTRU may decide to relay data based on a combination of the distance between the source/relay WTRU in addition to the received signal strength of transmissions (e.g. HARQ feedback) from the destination WTRU. For example, a relay WTRU may be configured with a minimum PSFCH received power for a given value of (range requirement minus source/relay distance), whereby the WTRU relays data if one or more (or average) PSFCH power is above the threshold.

The criteria for relaying may be that a relay WTRU may decide to relay data based on combination of the distance between the source/relay WTRU in addition to CQI reported by the destination WTRU. For example, a relay WTRU may be configured with a minimum CQI for a given value of (range requirement minus source/relay distance), whereby the WTRU relays data if one or more (or average) CQI is above the threshold.

The criteria for relaying may be that a relay WTRU may decide to relay data based on received HARQ feedback from the destination in response to a recent transmission with the same/similar range requirement. For example, a relay WTRU, following reception of DTX to a transmission to the destination for a transmission with a range requirement of X, may decide to drop subsequent PDUs received having range requirement >=X, possibly for a (pre)configured time period.

The criteria for relaying may be that a relay WTRU may decide to relay data if the difference between the range requirement (e.g. distance between source WTRU and destination WTRU) and the updated distance between the relay WTRU and destination WTRU is less than a configured distance threshold. The updated distance between the relay WTRU and the destination WTRU may be determined by subtracting, from the distance between the relay WTRU and destination WTRU, the offset distance, for example.

A WTRU, upon determining that a PDU need not be relayed (based on conditions described above), may decide to drop the PDU. Alternatively, the WTRU may decide to either drop the PDU or relay the PDU, depending on other factors such as CBR, CB, number of relay hops, or priority of the transmission itself.

A relay WTRU may send a packet drop indication to the source WTRU. The relay WTRU may indicate explicitly the decision to drop or relay the PDU to the source WTRU if configured. For example, the relay WTRU may transmit a message to the source WTRU indicating that one or more PDUs, possibly associated with a specific communication range, were dropped by the relay WTRU. The relay WTRU may send such information in a SL MAC CE, SL RRC message or another logical equivalent, or using a new/existing PHY channel (e.g. transmission in an SCI, a dedicated PSFCH resource).

A source WTRU, upon reception of such packet drop indication, may further perform dropping of PDUs with same or larger minimum communication range, possibly for a pre-configured time period after reception of the indication or may change the transmission parameters associated with transmissions of the same or larger minimum communication range transmissions (e.g. map such transmissions to the default SLRB configuration, or modify certain parameters of the associated SLRB configuration).

Solutions for determining resources for WTRU to WTRU Relay with E2E QoS are disclosed herein. Solutions by which a WTRU may perform resource selection based on configuration of next hop WTRU and expected remaining packet delay budget are also disclosed herein.

According to some implementations, a WTRU may obtain resources or performs resource selection for transmitting in one hop of a relayed WTRU-to-WTRU link with one or more relay WTRUs based on resource selection information provided by another WTRU.

According to some implementations, a WTRU configured in an autonomous resource selection mode (e.g. Mode 2) determines the setting for a resource selection window considering the resource selection configuration applied at the next hop relay WTRU. In this case, the WTRU in the first hop may select resources for the transmission in the first hop link such that the remaining time from an end-to-end latency budget is available for a relay WTRU in the next hop link to perform the subsequent transmission.

According to some implementations, a Tx WTRU in the first hop (source WTRU) which may be configured in Mode 2 may determine the resource selection window by considering the end-to-end latency budget (e.g. PDB) combined with the knowledge of the relayed link. The source WTRU may also determine resource selection window based on the awareness of the resource selection mode used by the relay WTRU. The source WTRU may also consider the processing delay in the relay WTRU as part of the calculation of the resource selection window.

The resource selection mode and/or the processing delay at the relay WTRU may be provided to the source WTRU during the (re)configuration of the SLRB and the associated LCHs, for example. Alternatively, or additionally, a source WTRU may assume a fixed or (pre)configured value of processing delay. Alternatively, or additionally, the relay WTRU may indicate to the source WTRU the updated configuration in a PC5-RRC, SL MAC CE, SCI, or another logically equivalent message or transmission for example. As an example, if the resource allocation mode at relay WTRU changes from Mode 2 to Mode 1 or if the processing duration changes (e.g. exceeds certain threshold value) at relay WTRU an indication may be sent to the source WTRU to indicate the updated configuration. For example, if the end-to-end latency budget is M (time slots), the source WTRU may set the T2 = M-M2-M1 where M2 and M1 are, respectively, the expected time budget/updated time budget (number of time slots) at the next hop link and the processing time duration at next hop WTRU. The T2 at the next hop relay WTRU, may be set as M2, for example.

In one example, the source WTRU and relay WTRU may share the overall time budget for a transmission (i.e. PDB) equally, taking into consideration the processing latency and/or resource selection mode at the relay WTRU. Specifically, M2 may be set as (PDB - M1)/2. Alternatively, or additionally the time budgets at the source/relay WTRU may be set/adjusted based on factors such as CBR, observed sensing load, CR, etc. at the source/relay WTRU. For example, M2 may be scaled based on the CBR observed at the relay and/or source WTRU and exchanged between WTRUs using mechanisms described herein.

According to some examples, the WTRUs may exchange the time budget explicitly. Specifically, the resource selection window may be set at the WTRU (e.g. source WTRU or relay WTRU) based on the expected time budget available for the next hop link and/or the updated time budget of the next hop link.

The resource selection window may be set at the WTRU based on the expected time budget available for the next hop link: For example, the WTRU may estimate the time available for the next hop link based on the T2 value of next hop/relay WTRU provided during (re)configuration of the SLRB/LCH. For example, the relay WTRU can be configured with a set of T2 values it can use (given current measurement conditions) for each possible value of priority or LCH configuration and may inform the source WTRU of such value.

The resource selection window may be set at the WTRU based on the updated time budget of the next hop link. For example, the updated time budget for transmission in the next hop link may be indicated by the next-hop/relay WTRU based of the conditions of the next hop link (e.g. CBR, RSRP). The relay WTRU may send the indication to source/previous-hop WTRU if the time budget in the next hop link varies from the initial configured value or the value provided in previous update.

A WTRU may inform a NW of the processing delay/link conditions for the relay WTRU. According to some implementations, when the source WTRU is in mode 1, and the relay WTRU is in mode 2 or out of coverage (OOC), a source WTRU may send a request to the network by including processing delay at the relay WTRU(s) and/or information on the link conditions in the next hop link. Specifically, the source WTRU may send any of the CBR reported by the relay WTRU, the processing delay of the relay WTRU, the calculated/expected time budget (for one or multiple priorities) at the relay WTRU, the sensing results, or any indication of the sensing load as measured by the relay WTRU, and/or measurements of RSRP/CQI at the next hop link.

Such information may be sent upon link establishment with the relay WTRU. Alternatively, or additionally, it may be sent whenever the source WTRU receives such updated information at the relay. The purpose of such information is to allow the NW to schedule resources at the source WTRU, taking into account the conditions of the peer WTRU.

A relay WTRU may use the remaining time budget for determining the resource selection window. According to an implementation, the relay WTRU may subsequently select the resources for transmission in the next hop link based on the remaining time indicated by the WTRU in the first hop. For example, the source WTRU may provide the remaining time budget, (e.g. T2 - timing of the actual resources selected) and may provide such information to the relay WTRU. The relay WTRU may use the remaining time budget in the computation of its own value of T2. Specifically, the relay WTRU may increase the time budget of its resource selection by the remaining time budget received from the source WTRU.

A WTRU may perform resource (re)selection for periodic resources based periodic resources at a previous-hop WTRU. According to an implementation, a WTRU configured to transmit periodically may determine the resources to be used based on receiving an indication related to the use of periodic resources at another WTRU (i.e. the previous hop link). Specifically, a previous hop/source WTRU may determine the resources for transmitting periodically. The next-hop/relay WTRU may perform periodic resource selection by selecting resources based on the timing of the resources used by the previous-hop/source WTRU. For example, the relay WTRU may select resources with similar periodicity and with some time offset which takes into account of processing/forwarding delay at the relay WTRU.

According to an implementation, a source WTRU, upon receiving the periodic resources (i.e. configured grant) from the network or selecting the periodic resources in mode 2, may indicate the periodic resource configuration to the relay WTRU(s) through an explicit message (e.g. PC5-RRC, or another logical equivalent). The WTRU may send such message upon initial selection of the resources, or reselection of such resources triggered at the source WTRU. The relay WTRU may, upon reception of such message, perform resource (re)selection using the same periodicity and including some offset (possibly (pre)configured or predetermined based on WTRU capability). The relay WTRU may further perform resource selection such that the offset is larger than a first value and/or smaller than a second value, where the first value may be pre-configured or defined based on WTRU capability and/or the second value may be pre-configured and may depend on the QoS of the data that can be transmitted on the periodic resources and/or the channel conditions at the relay (e.g. CBR, CQI reported by the destination WTRU, RSRP reported by the destination WTRU, etc.).

The source WTRU or network may indicate the use of periodic resources to the relay WTRU(s) by indicating the periodic resource configuration to one or more relay WTRUs in sidelink. For example, the resource configuration indication may contain any of the identifier of the resource pool configuration, start subchannel, number of subchannels, start time slot, offset time-slot and periodicity to be applied by the relay WTRU(s) when using the resources for transmitting in the next hop link(s). For certain parameters such as the offset-time slot an allowed range may also be indicated so that the relay WTRU may apply its own changes when using the resources while adhering to the allowed range constraint, for example. The resource configuration may be indicated by the source WTRU either to each relay WTRU configured with the SLRB in individual PC5-RRC messages (or via other logical equivalents) or in a single PC5-RRC message (or a logical equivalent) to the relay WTRU(s) where each relay WTRU may be identified with the WTRU ID in the message. In the case when the relay WTRU is in coverage, the periodic resource configuration may be indicated by the network in an RRC message or any logical equivalent.

The source WTRU or network may indicate the use of periodic resources to the relay WTRU(s) by activating the periodic resource configuration at the relay WTRU in sidelink. For example, the source WTRU may send an activation message to activate the use of periodic resources, possibly configured previously at the relay WTRU. The activation message to activate the use of the periodic resources may contain the identifier associated with the configured periodic resources and/or the allowed offset value to be used by the relay WTRU when transmitting in the next hop link. The activation message may be sent by the source WTRU to the relay WTRU in SCI, in a SL MAC CE, or another logical equivalent.

Upon receipt of the configuration/trigger (e.g. SCI) from source WTRU for using the periodic resources, the relay WTRU may use the parameters (i.e. offset time slot and periodicity) indicated by the source WTRU/network on the indicated periodic resources (i.e. resource configuration identifier, start subchannels, number of subchannels) when performing resource selection. For example, the relay may use the same periodicity value used by the source WTRU on the periodic resources while applying the offset time slot to offset the delay related to data reception and processing at the relay WTRU.

According to an implementation, a relay WTRU may trigger resource (re)selection upon the detection of a periodic resource used by the source WTRU (e.g. in SCI). Specifically, resource (re)selection may be triggered by the relay WTRU when it detects an SCI transmitted by the source WTRU which reserved periodic resources, and possibly for which such periodic resources indicate a destination ID which matches the destination ID of the relay WTRU. The relay WTRU may use the same/similar parameters for its own periodic process (e.g. periodicity, number of resources), and may select such resources based on an offset as described herein. A WTRU may further perform such (re)selection based on the presence of some explicit indication or trigger from the source WTRU (e.g. sent in SCI). For example, the source WTRU may be configured to include an indication in SCI when such process will be used to carry data of a certain LCH/QoS. The relay WTRU may then perform resource (re)selection of an associated periodic process only in the presence of such indication in SCI.

A relay WTRU may trigger an indication to the NW upon reception of a periodic process from the source WTRU. According to an implementation, a relay WTRU may send an indication to the network upon reception of a periodic resource configuration from the peer (source) WTRU, or SCI triggering such periodic resource, as described herein. Such indication may be sent in an RRC message (e.g. "WTRUAssitancelnformation, SidelinkWTRUlnformation"), a BSR, a dedicated SR, or another logical equivalent. The WTRU may further include details of the periodic resources reserved by the peer (source) WTRU, such as period, offset, LCH/priority, L2 ID of the peer WTRU etc.

A relay WTRU may ensure data received from a periodic process are relayed onto associated periodic process/resources at the relay. A relay WTRU may configure an LCP restriction, a periodic transmission process restriction, or similar to ensure that data received by the WTRU on one periodic process is transmitted on the associated transmission periodic process at the relay WTRU. Specifically, when mapping ingress LCH to egress LCH and/or when performing LCP for a grant associated with an associated periodic process, the relay WTRU may ensure to prioritize and/or restrict data to the data received from the receive process to which the transmission process is associated. Such may be achieved by a WTRU configured with an LCP restriction associated to a periodic resource which is related to or derived from a similar LCP restriction applied at the source WTRU for the associated periodic resources (the relay WTRU may receive such LCP restriction from the source WTRU, for example, at the time when the periodic resources are selected). Alternatively, or additionally, a WTRU may prioritize, during LCP for an associated periodic resource, LCHs containing data from the LCHs received from the source WTRU in the associated periodic resources at the source WTRU.

Solutions for determining a radio bearer mapping at a remote WTRU are described herein. In some solutions, a remote WTRU may be configured to perform 1:1, N:1 or 1:N mapping from one or more end-to-end (E2E) radio bearers to one or more PC5 RLC channels for improving the utilization of the SL channels/resources while satisfying the E2E QoS.

In some examples, the remote WTRU may be configured with an adaptation layer, or equivalent logical process or function operating in hardware or software, to map from 1 or N E2E radio bearers (e.g. each including at least the PDCP sublayer/entity at the transmitting side and receiving side of the radio bearer) to at least one RLC channel (e.g. each including of at least the RLC sublayer/entity at the transmitting side and receiving side of the RLC channel). As an example, the E2E radio bearer may be carrying the PDUs corresponding to one or more QoS flows, where different QoS flows may be mapped to one or more PDCP entities. In this case the PDUs of the E2E radio bearers may be PDCP PDUs, for example. For a 1:1 or N:1 mapping, the adaption layer, or a logical equivalent, may map the PDUs associated with one or more E2E radio bearers to a single PC5 RLC channels, for example. In another example, the adaptation layer, or logical equivalent, may be configured to perform 1:N mapping where the PDUs from an E2E radio bearer may be mapped to one or more PC5 RLC channels. The one or more PC5 RLC channels at the remote WTRU may be directed towards the same relay WTRU or different relay WTRU.

The adaption layer, or equivalent logical process or function operating in hardware or software, at the remote WTRU may be configured **in** both a WTRU-to-WTRU relaying scenario and in WTRU-to-Network relaying scenario. In the WTRU-to-WTRU relaying scenario, the remote WTRU may map the PDUs associated with E2E sidelink radio bearers (between source/remote WTRU and destination/target WTRU) to one or more egress RLC channels (transmitting side of remote WTRU). At the adaptation layer of the WTRU-to-WTRU relay WTRU, the received PDUs at the corresponding ingress RLC channels (receiving side of relay WTRU) may be mapped to other one or more egress PC5 RLC channels (transmitting side of relay WTRU) when relaying to the intended destination WTRU(s), for example. Similarly, in the WTRU-to-Network relaying scenario, the remote WTRU may map the PDUs associated with E2E Uu radio bearers (between remote/source WTRU and a nodeB (e.g., an eNB or gNB)) to one or more egress RLC channels (transmitting side of remote WTRU). At the adaptation layer, or logical equivalent, of the WTRU-to-Network relay WTRU, the received PDUs at the corresponding ingress RLC channels (receiving side of relay WTRU) may be mapped to other one or more egress Uu RLC channels (transmitting side of relay WTRU) when relaying to the nodeB (e.g., eNB or gNB) in network, for example.

A remote WTRU may be configured with mapping configurations at an adaptation layer, or logical equivalent, for performing N:1 or 1:N mapping. More specifically in one solution, a remote WTRU may perform mapping from N E2E radio bearers to an RLC channel at the adaptation layer, or logical equivalent, based on mapping configurations. For example, the mapping of the PDUs from one or more E2E radio bearers, where each radio bearer may be carrying one or more QoS flows, to an RLC channel may be performed such that the QoS achieved (e.g. throughput, latency) upon mapping is equivalent to the QoS prior to the mapping. A remote WTRU may be configured with the mapping configurations at the adaptation layer either by the relay WTRU (e.g. via PC5-signaling) or by network (e.g. RRC signaling), for example.

The mapping configurations configured in the remote WTRU may correspond to one or more of the following: a radio bearer (with ID x) may be allowed to be mapped to an RLC channel (with ID y); a radio bearer (with ID x) may be allowed to be mapped to one of M RLC channels (with IDs y1,..yM); a group of K radio bearers (with IDs x1,..,xK, with a group ID G) may be allowed to be mapped to one of M RLC channels (with IDs y1,..yM); or any one or more of the K radio bearers in a group (with IDs x1,..,xK, with group ID G) may be allowed to be mapped to one of M RLC channels (with IDs y1,..yM).

An equivalent mapping configuration may also be configured in the remote WTRU for the RLC channels corresponding to the allowable one or more radio bearers that may be mapped to the RLC channel. The different mapping configurations or the association between the E2E radio bearers and the RLC channels may be identified with a mapping ID. As an example, the mapping/association of a radio bearer (with ID x) to M allowable RLC channels (with IDs y1,...yM) may be identified with a particular ID (e.g mapping configuration ID X).

In addition to the mapping configurations, a remote WTRU may also be configured with default mapping when mapping one or more radio bearers to the RLC channels. For example, in the case when the remote WTRU is configured to map one or more radio bearers to one of M allowable RLC channels, the remote WTRU may map the radio bearer to a default RLC channel which may be configured within the M allowable RLC channels (e.g. a radio bearer with ID x may be mapped to a default RLC channel with ID y). Additionally, each of the M RLC channels allowable for mapping a radio bearer may also be associated with a priority value or an index value, for example. In this case, a remote WTRU may map the PDUs from a radio bearer to an RLC channel with the highest priority until a mapping criterion is satisfied before mapping the PDUs to an RLC channel with the next highest priority, for example. A mapping criterion may correspond to any one of the following combinations including, PDU count, buffer in the RLC channel exceeds a threshold and expiry of a timer, for example. A mapping criterion, which the remote WTRU may use when mapping/multiplexing the radio bearers to the RLC channels, may be configured to achieve a particular behavior such as proportional fairness or round robin, for example.

In another solution where 1:N mapping is supported at the adaptation layer, or logical equivalent, for mapping from a radio bearer to one or more RLC channels, the different mapping configurations configured at remote WTRU may correspond to one or more of the following: a radio bearer (with ID x) may be allowed to be mapped to two RLC channels (with IDs y1,y2); or a radio bearer (with ID x) may be allowed to be mapped to at least two of the M RLC channels (with IDs y1,...,yM).

Similar to the case of N:1 mapping, the different mapping configurations or the association between the E2E radio bearers and the RLC channels may be identified with an mapping ID. Additionally, when performing 1:N mapping, the remote WTRU may also be configured with a splitting criterion for splitting the traffic in the radio bearer between the RLC channels. The splitting criterion may correspond to any one of the following conditions including, PDU count, buffer in the RLC channel exceeds a threshold and expiry of a timer associated with an RLC channel, for example.

A remote WTRU may use the mapping configurations at the adaptation layer either semi-statically or dynamically when performing N:1 or 1:N mapping. In the case of semi-static configuration at the adaption layer, or equivalent logical process or function operating in hardware or software, a remote WTRU may use the mappings configured, via PC5-RRC by the relay WTRU, via RRC by the network, or another logically equivalent message or signal, until a reconfiguration message is received. In the case of dynamic configuration, the remote WTRU may be initially pre-configured with a set of different mapping configurations, as described above for example. The remote WTRU may then dynamically change or select a mapping configuration from the set of preconfigurations based on triggering conditions determined at the remote and/or based on an indication message (e.g. activation/deactivation) received from the relay WTRU or network, for example. In some examples, a remote WTRU may autonomously determine the mappings at the adaptation layer, or equivalent logical process or function operating in hardware or software, based on the triggering conditions detected at remote WTRU and/or based on indication message received from relay WTRU/network. Descriptions of triggering conditions and indication messages are provided in the following sections.

A remote WTRU may send control information associated with adaptation layer, or an equivalent logical function operating at the WTRU. In one solution where the remote WTRU performs N:1 or 1:N mapping at the adaptation layer, the remote WTRU may provide/send the control information related to the radio bearers and/or the mapping configuration applied when sending the PDUs to the RLC channels and subsequently to the relay WTRU.

The contents of the control information may include an E2E radio bearer ID. For example, in the case of WTRU-to-WTRU relaying the radio bearer ID corresponds to the sidelink radio bearer ID and in the case of WTRU-to-Network relaying, the radio ID corresponds to the Uu radio bearer ID. Additionally, the information on radio bearer IDs may be applicable for both L2 and L3 radio bearer types, for example.

The contents of the control information may also include a number of E2E radio bearers mapped to RLC channel. For example, in the case when remote WTRU performs N:1 mapping, the remote WTRU may indicate the number of radio bearers that are mapped to the RLC channel.

The contents of the control information may also include load information related to the E2E radio bearers. For example, the remote WTRU may indicate the load of the N radio bearers mapped to the RLC channel. The load of a radio bearer may be indicated in terms of the data/bit rate (total or average), PDU count, and percentage of buffer occupancy, for example.

The contents of the control information may include also include a QoS flow ID. For example, the remote WTRU may include information on the QoS flow IDs (e.g. QFI) that are carried in the radio bearer which is subsequently mapped to the RLC channel(s).

The contents of the control information may also include a Path/Route ID. For example, the path ID may correspond to the E2E L2 ID (source/remote WTRU ID, final destination ID) or other E2E routing IDs which may be used to assist the relay WTRU with traffic routing to the next hop node (e.g. gNB, destination WTRU). In addition, the path ID may also correspond to the L2 ID of the PC5 link between the remote WTRU and relay WTRU, for example.

The contents of the control information may also include a mapping configuration ID. For example, if the remote WTRU applies one of the mapping configurations configured for mapping between radio bearers and RLC channels, the ID of the mapping configuration may be included. The remote WTRU may include the mapping configuration ID(s) when performing the mapping update in any of the following combinations: N:1 to 1:1 and vice-versa, N:1 to 1:N and vice-versa, 1:N to 1:1 and vice-versa.

The contents of the control information may also include QoS related information. For example, the remote WTRU may include additional information for ensuring/enforcing E2E QoS as part of the control information. The QoS information may include latency related information (e.g. timestamp indicating the start time upon mapping the PDUs from radio bearers to RLC channel, expected latency on PC5 link for transmitting to relay WTRU, expected remaining time available at relay WTRU for relaying to next hop node) to assist with scheduling and forwarding at relay WTRU, for example. Additionally, remote WTRU may indicate the priority value assigned to the radio bearer, where the priority may refer to the per-radio bearer priority if an N:1 mapping from multiple radio bearers to an RLC channel is performed, for example.

The remote WTRU may send the control information to the next-hop relay WTRU in at least one of the following methods.

The remote WTRU may also send the control information to the next-hop relay WTRU in an adaptation layer header. For example, the control information may be included within the adaptation layer header, which may be appended to the PDCP PDUs associated with the radio bearers, prior to sending the PDUs to the RLC channels.

The remote WTRU may also send the control information to the next-hop relay WTRU in an adaptation Layer control PDU. For example, the control information may be sent in an adaptation layer control PDU, which may be sent to the mapped RLC channel as a separate adaptation layer PDU.

The remote WTRU may send the control information to the next-hop relay WTRU in other control signaling. For example, the control information may be sent either in PC5-RRC, SL MAC CE or SCI.

The remote WTRU may send the control information related to the adaptation layer, or an equivalent logical function operating at the WTRU, including at least one of the above information, to the next-hop relay WTRU associated with the (egress) RLC channels when sending the PDUs over the SL/PC5 link. Alternatively, or additionally, the remote WTRU may also send the control information when changing/updating the mapping configuration at the adaptation layer, or equivalent logical function operating the WTRU. For example, in the case when the remote WTRU updates/changes the mapping configuration dynamically, the remote WTRU may indicate the control information corresponding to the changed mapping (e.g. changed mapping configuration ID) to the relay WTRU. The remote WTRU may also send the control information to the network (in WTRU-to-Network relaying scenario) or to the destination WTRU (in WTRU-to-WTRU relaying scenario) when changing the mapping configuration dynamically, for example. In this case the control information may be sent via the relay WTRU (transparently) using E2E RRC signaling or E2E PC5-RRC signaling, respectively, or another logical equivalent, as an example. In the case when the remote WTRU may have direct links (Uu or PC5) available to the network or destination WTRU, the control information may be sent directly without relaying.

A Remote WTRU may perform mapping at an adaptation layer, or other logical equivalent function running at the remote WTRU, based on triggering conditions detected/determined at the remote WTRU.

In some solutions, the remote WTRU may select a mapping configuration from a set of pre-configurations for mapping from the E2E radio bearers to RLC channels based on triggering conditions detected and/or determined at remote WTRU. The rules for selecting the mapping configurations and associated the triggering condition may be configured in the remote WTRU either by the relay WTRU (via PC5-RRC or another logical equivalent) or by the network (via RRC or another logical equivalent) for example. The remote WTRU may use similar triggering conditions for autonomously determining the mapping at the adaptation layer, or other equivalent logical function running at the WTRU. The remote WTRU may select/unselect an RLC channel or a mapping configuration for mapping the radio bearers to the RLC channel at the adaptation layer based on one or more of the following triggering conditions.

The remote WTRU may select/unselect an RLC channel or a mapping configuration for mapping the radio bearers to the RLC channel at the adaptation layer based buffer status at RLC channel. For example, the remote WTRU may determine/select the mapping if the buffer level of the RLC channel drops below a threshold. Likewise, the remote WTRU may not select an RLC channel for mapping if its buffer level increases above a threshold value.

The remote WTRU may also select/unselect an RLC channel or a mapping configuration for mapping the radio bearers to the RLC channel at the adaptation layer based on a timer. For example, the remote WTRU may start a timer, with a configured time duration, when mapping the PDUs from one or more radio bearers to an RLC channel and perform the mapping until the expiry of the timer. The configured time duration may be determined as a function of low layer measurements corresponding to the sidelink radio channel associated with the RLC channel.

The remote WTRU may also select/unselect an RLC channel or a mapping configuration for mapping the radio bearers to the RLC channel at the adaptation layer based on a QoS related marking in a PDU header. For example, the remote WTRU may use the marking in the PDU headers, possibly from the higher layers or SDAP sublayer, to identify the RLC channel to map the PDUs from the radio bearers. In such case the marking in the PDU header may be associated with a QoS parameter (e.g. latency/PDB requirement, priority) which the remote WTRU can use along with the QoS related information of the RLC channels (e.g. priority) to determine the RLC channel that enables achieving the QoS requirement of the radio bearer. As an example, the remote WTRU may select/determine a mapping from a radio bearer to an RLC channel whose assigned priority is comparable/matches with the priority assigned to the radio bearer.

The remote WTRU may also select/unselect an RLC channel or a mapping configuration for mapping the radio bearers to the RLC channel at the adaptation layer based on SL channel conditions. For example, a remote WTRU may determine/select the mapping if the measurement of the SL radio channel (e.g. SL RSRP, CQl) which is associated with the RLC channel is below/above a certain threshold value and the measurement remains below/above the threshold value for a certain time duration. Similarly, a remote WTRU may use the number of HARQ feedbacks (ACK/NACK) received from relay WTRU on the SL channel associated with the RLC channel to determine/select the mapping to the RLC channel. As an example, if the number of HARQ NACK feedbacks on a SL channel exceed a threshold, the RLC channel(s) associated with the SL radio channel may be not be selected for the mapping.

The remote WTRU may also select/unselect an RLC channel or a mapping configuration for mapping the radio bearers to the RLC channel at the adaptation layer based on SL load conditions. For example, the remote WTRU may determine/select the mapping if the load conditions of the SL channel (e.g. CBR or CR) which is associated with the RLC channel is below or above a certain threshold value and the load remains below or above the threshold value for a certain time duration.

The remote WTRU may also select/unselect an RLC channel or a mapping configuration for mapping the radio bearers to the RLC channel at the adaptation layer based on a received indication message. For example, a remote WTRU may determine/select the mapping based on the indication message received from a relay WTRU containing the trigger to dynamically change the adaptation layer mapping and/or other control information (e.g QoS related information). In the WTRU-to-Network relaying scenario, the control information for changing/updating the mapping at the adaptation at remote WTRU may also be received by the relay WTRU from the network either directly on Uu link or via the relay WTRU (transparently) **in** E2E RRC signaling or other logically equivalent signaling. Likewise, in the WTRU-to-WTRU relaying scenario, the control information for changing/updating the mapping at the adaptation layer may be received by the remote WTRU from the destination WTRU either directly on SL or via the relay WTRU (transparently) in E2E PC5-RRC signaling or other logically equivalent signaling.

Relay WTRU may send indications to a remote WTRU for changing/updating the mapping at an adaptation layer, or some other logically equivalent function operating at the WTRU.

In one solution, the relay WTRU may send an indication message to the remote WTRU for triggering to change/update the mapping from radio bearers to RLC channels at the adaptation layer of remote WTRU. The relay WTRU may also send the indication message to remote WTRU to dynamically activate/deactivate a mapping configuration. The contents of the indication message sent by the relay WTRU may include one or more types of control information related to the mapping applied at the adaptation layer of remote WTRU.

The contents of the indication message sent by the relay WTRU may include a mapping configuration ID. For example, the relay WTRU may send a command/instruction to select a mapping configuration by indicating the mapping configuration ID. The relay WTRU may send the indication containing the mapping configuration ID(s) to perform the mapping update in any of the following combinations: N:1 to 1:1 and vice-versa, N:1 to 1:N and vice-versa, 1:N to 1:1 and vice-versa. The relay WTRU may also include the time duration for which update in the mapping may be applied by the remote WTRU after which the mapping configuration may be transitioned to either the initial, previous or default configuration.

The contents of the indication message sent by the relay WTRU may also include mapping information. For example, the relay WTRU may send the IDs of the one or more radio bearers and the ID of the RLC channel for indicating the mapping from the radio bearer(s) to an RLC channel. The relay WTRU may also indicate a priority value for the radio bearers when mapping to the RLC channel at the remote WTRU.

The contents of the indication message sent by the relay WTRU may include a Path/Route ID. For example, the relay WTRU may send the path ID corresponding to the E2E L2 (source/remote WTRU ID, final destination ID) or other E2E routing IDs which may be used to assist the remote WTRU by changing the mapping at the adaptation layer that may result in re-routing the traffic from the radio bearers to another RLC channel to same relay WTRU or a different relay WTRU. In one case, the path ID may also be associated with a path status information indicating the availability or unavailability of the path for transmission along with, possibly, the time duration for availability/unavailability of the path.

The contents of the indication message sent by the relay WTRU may also include QoS information. For example, the relay WTRU may send information related to the QoS associated with the E2E radio bearer, ingress PC5 RLC channel (i.e. corresponding to the egress RLC channel at remote UE) and/or egress RLC channel (i.e. corresponding to E2E radio bearer, where the egress RLC channel is either Uu or PC5). The QoS information may include latency related information (e.g. expected transmission latency on Uu/PC5 link in next hop at relay WTRU, expected latency budget available for transmission at remote WTRU) to assist with scheduling and transmission at remote WTRU, for example. Additionally, a relay WTRU may indicate the priority value assigned to the radio bearer, where the priority may refer to the per-radio bearer priority if N:1 mapping from multiple radio bearers to an RLC channel is performed at a remote WTRU.

The indication message containing at least one of the control information may be sent by the relay WTRU. The indication message containing at least one of the control information messages may be sent by the relay WTRU in an Adaptation Layer control PDU. For example, the relay WTRU may send the control information in an adaptation layer control message to the remote WTRU.

The indication message containing at least one of the control information may also be sent by the relay WTRU in a polling request. For example, the relay WTRU may send a polling request message requesting the remote WTRU to respond with information on SL channel measurement and/or loading information (e.g. CBR) where the polling request may also contain the control information corresponding to adaptation layer mapping.

The indication message containing at least one of the control information may also be sent by the relay WTRU in other signaling such as PC5-RRC, SL MAC CE, or SCI messages.

The relay WTRU may send the indication message to the remote WTRU based on one or more of the triggering conditions detected/determined at the relay WTRU.

In some examples, the relay WTRU may send the indication message to the remote WTRU based on a trigger from Network/destination WTRU. For example, the indication may be sent when receiving a triggering message from the network (e.g. in RRC, MAC CE or DCI in WTRU-to-Network relaying case) or from the destination WTRU (e.g. in PC5-RRC, SL MAC CE or SCI, e.g., in a WTRU-to-WTRU relaying case).

In some examples, the relay WTRU may send the indication message to the remote WTRU based on loading at a relay WTRU. For example, the indication may be sent for updating the mapping at a remote WTRU when the buffer level at the egress RLC channel(s) associated with the ingress PC5 RLC channel from the remote WTRU is above a certain threshold value and remains above the threshold value for a certain time duration. Likewise, the relay WTRU may also send the indication for updating the mapping when the buffer level at the ingress PCH RLC channel associated with the egress PC5 RLC channel at the remote WTRU is above a certain threshold and remains above the threshold for a time duration.

In some examples, the relay WTRU may also send the indication message to the remote WTRU based on a change in adaptation layer configuration at a relay WTRU. For example, the indication may be sent when the mapping configuration at the adaptation layer at relay WTRU between the ingress RLC channels to egress RLC channels and/or the configuration of the egress RLC channels (e.g. priority, PDB, PBR) is changed, which may possibly impact the adaptation layer mapping at remote WTRU.

In some examples, the relay WTRU may also send the indication message to the remote WTRU based on channel condition at a next hop link. For example, the indication may be sent if the channel condition (e.g. RSRP, CQI) on the Uu link (for WTRU-to-Network relaying) or PC5 link (WTRU-to-WTRU relaying) drops below a threshold and remains below a threshold for a certain time duration. In addition, for WTRU-to-WTRU relaying the indication may be sent if the load at the next-hop PC5 channel (i.e. CBR, CR) is above a threshold and remains above the threshold for a certain time duration.

In some examples, the relay WTRU may also send the indication message to the remote WTRU based on QoS on a next hop link. For example, the indication be sent when QoS related measurement (e.g latency on the egress RLC channel over the next hop link) exceeds a certain threshold (e.g. latency budget). Likewise, the relay WTRU may send the indication to remote WTRU if the loading conditions on the next hop link changes resulting in the scheduling latency to either increase above a threshold or decrease below a threshold.

In some examples, the relay WTRU may send the indication message to the remote WTRU based on change in DRX configuration. For example, the indication may be sent when the DRX configuration at the relay WTRU is modified which may possibly impact the reception at the ingress PC5 RLC channels associated with the egress PC5 RLC channels of the remote WTRU.

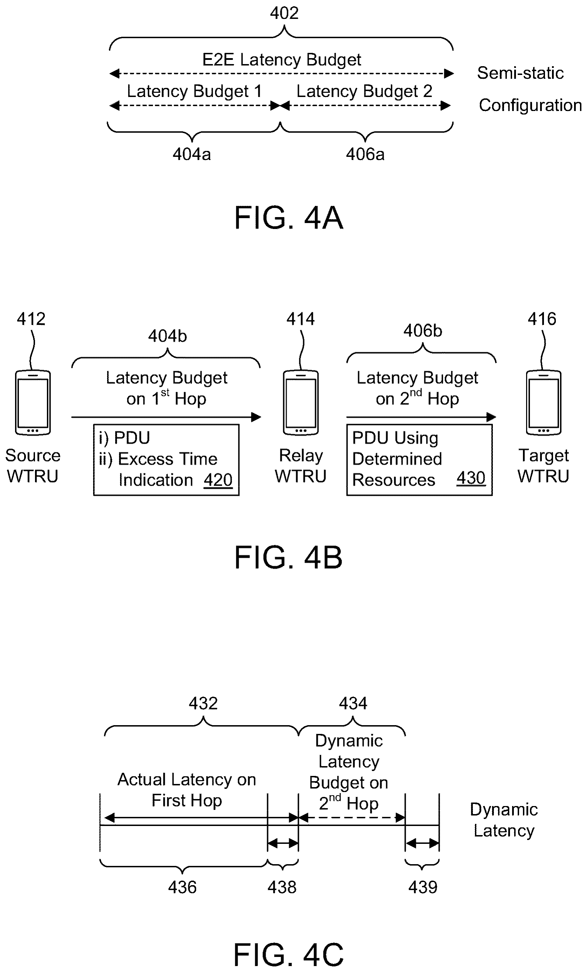

Figs. 4A-4C depict a solution in accordance with an embodiment of the present invention. In some circumstances, WTRU-to-WTRU relaying certain capabilities may be beneficial to have in WTRUs for satisfying QoS requirements (e.g. latency) on an end-to-end (E2E) basis when transmitting over one or more relay WTRUs. However, in many cases, the transmitting or source WTRU may be unaware of the dynamic link conditions or congestion in subsequent hops. Furthermore, oftentimes the relay WTRUs may not be aware of the QoS parameters, including E2E QoS requirements and dynamic remaining QoS (e.g., due to unawareness of latency incurred on previous hop link). Therefore, according to one embodiment, a WTRU (e.g., a relay WTRU) may determine resources for relaying a received PDU to one or more target WTRUs for satisfying an E2E QoS (e.g., a latency budget) by performing resource selection or reselection based on an excess time indication (e.g., such as one received from source WTRU) and an expected latency on the next hop link, obtained from CBR measurement and a pre-configured mapping relation.

As can be seen in Fig. 4A, in a situation where a transmission from a source to a target device may have a total end-to-end latency budget 402, which, if being undertaken through a relay will include two constituent transmissions, from a source device to a relay device and from a relay device to a target device. Accordingly the total end-to-end latency budget can be understood to be a combination of a first hop latency budget 404a and a second/next hop latency budget 406a.

Thus, according to embodiments as depicted in Fig. 4B a process for achieving an end-to-end quality of service (QoS) that can be performed by a WTRU can be understood reference to a source WTRU 412 a relay WTRU 414 and a target WTRU 416. A transmission from a source WTRU 412 to a target WTRU 416 may pass through a relay WTRU 414. The transmission form a source WTRU 412 to the relay WTRU 414 should be understood to be the first hop while the transmission from the relay WTRU 414 to the target WTRU 416 should be understood to be the next hop. The next hop may be referred to herein as the second or subsequent hop interchangeably. In the first hop, the relay WTRU 414 may receive in 420 a protocol data unit (PDU) and an excess time indication from a source WTRU. Notably, the transmission of the first hop may have fallen short of or exceeded the first hop latency budget 404b. The relay WTRU 414 may then determine an expected latency for a next hop link based on a measure of channel load for the subsequent hop. The relay WTRU 414 may then dynamically determine the next hop latency budget 406b based on the excess time indication received in 420 and the expected latency. Thereafter, the relay WTRU 414 may determine the resources for transmitting the PDU received in 420 based on the determined next hop latency budget. Provided that resources that meet the next hop latency budget were available and determined to be used for the subsequent transmission, the relay WTRU can then transmit in 430 the received PDU on the next hop using the determined resources. In some cases, however, if no available resources meet the determined next hop latency budget, the relay WTRU 414 may drop the PDU received in 420.

It should be understood that, as can be seen in Fig. 4C that latency budget remaining 434 for the second hop depends on the the acutal latency accrued 432 during the first hop. The second hop latency budget 434 may change dynamically depending on the actual latency of the first hop, to compensate for any additional delay taking place during the first hop. The dynamic second hop latency budget 434 may be understood as the aforementioned T2 value (used in the resource selection window) that indicates the maximum available time available for completing the transmission. For example, in some cases, the next hop latency budget 434 is equal to the expected latency minus an excess time parameter 438. In other words, the the latency budget remaining for the second hop 434 may be off-set or reduced by an amount 439, which may be understood to by a change in latency budget margin due to congestion on the second hop. In order to fit within the total E2E latency budget, this amount 439 should be sufficient to compensate for the excess time 436 that was used to complete the first hop. The amount of excess time 436 may be understood to mean the additional time beyond the latency budget 404a that the transmission should have had in a static configuration depicted in Fig. 4A. Therefore, the remaining latency budget for the second hop 434 may be dynamically changed by an amount 439 depending on the excess time 438 indication obtained from the first hop.

In some embodiments, such as the those shown in Figs. 4A-4C, the relay WTRU 414 may determine the expected latency for the next hop link based on channel busyness ratio (CBR) measurements and a pre-configured mapping between CBR and the expected latency. The dynamic determination of the the next hop latency budget 434 can depend on an end-to-end latency budget 402 (i.e., a total latency budget) that is unknown to the relay WTRU and the excess time indication may indicate excess latency 438 due to congestion on a previous hop. In some embodiments, the next hop latency budget may depend on a packet delay budget. The relay WTRU may determine the packet delay budget based on a packet delay bit in a header of a packet that the relay WTRU receives from the source WTRU. In some embodiments, the relay WTRU may monitor a plurality of subchannels available for a transmission from the relay WTRU 414 to a target WTRU to obtain the measure of channel load.

It should be understood that the excess time indication sent from a source WTRU 412 to the relay WTRU 414 may indicate that the transmission exceeded the latency budget 404b on the first hop and the amount 438 by which it exceeded the latency budget may need to be compensated for on a subsequent hop. Furthermore, in some embodiments, the relay WTRU 414 may be configured with a mapping between the CBR and the expected latency on a subsequent hop that allows it to make the determination of the remaining latency budget described above. Accordingly, the relay WTRU 414 may determine based on the CBR whether relaying the PDU onwards to the second hop will be possible within the remaining latency budget 406b. After monitoring or sensing the resources (e.g., subchannels) available or assigned to it, the relay WTRU 414 may determine the CBR and reserve or select resources from the resource pool available to it that will enable the completion of the transmission within the remaining latency budget 406b. In some embodiments, the relay WTRU 414 may preferably select resources that allow for a CBR above a predetermined threshold. The selection or reselection of the resources may be perfomered according to any of the procedures described herein including the selection procedures associated with Mode 2 described earlier. It should be understood that the transmission may be completed on the second hop where the amount of change 439 in the dynamic second hop latency budget may be directly correlated with the excess time 436 used during the first hop.

Techniques are disclosed herein for SLRB Configuration in WTRU-to-WTRU relaying to ensure E2E QoS. A WTRU is configured with rules to map a higher layer packet flow to a relayed vs non-relayed SLRB. A WTRU is configured to relay and indicate the allowable path type on its transmissions. A WTRU may determine/send the AS layer configuration for next hop WTRU(s). The WTRU may update the parameters associated with lower layer configuration for relay WTRU. The WTRU may select a lower layer configuration for relay WTRU from multiple pre-configurations. Examples of triggers/indications received by a WTRU for updating the lower layer configuration are disclosed. Examples of indications sent by a WTRU for updating the lower layer configuration are disclosed.

A WTRU may send an indication to the network to request to update lower layer configuration in the relay WTRU. The relay WTRU may determine the lower layer configuration based on a received indication for triggering configuration update.

Techniques are disclosed herein for determining relaying for WTRU to WTRU Relays with an E2E communication range. A relay WTRU may determine the decision for relaying to the destination WTRU based on the end-to-end communication range. A relay WTRU may send a packet drop indication to the source WTRU. A relay WTRU may derive the range for transmission from the received range requirement.

Techniques are disclosed herein for determining resources for WTRU to WTRU Relay with E2E QoS. A WTRU performing resource selection based on configuration of next hop WTRU and expected remaining packet delay budget. A WTRU may inform the NW of the processing delay/link conditions for the relay WTRU. A WTRU (Relay) may use the remaining time budget for determining the resource selection window. A WTRU may perform resource selection for periodic resources based periodic resources at a previous-hop WTRU. A WTRU (Relay) may trigger an indication to the NW upon reception of a periodic process from the source WTRU. A WTRU (relay) may ensure data received from a periodic process are relayed onto associated periodic process/resources at the relay.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

### ITEMS

Itemized list:
1. A method for achieving an end-to-end quality of service (QoS) performed by a wireless transmit/receive unit (WTRU), the method comprising:
   receiving a protocol data unit (PDU) and an excess time indication from a source WTRU;
   determining an expected latency for a next hop link based on a measure of channel load;
   dynamically determining a next hop latency budget based on the received excess time indication and the expected latency;
   determining resources for transmitting the received PDU based on the determined next hop latency budget; and
   on a condition that the resources are available, transmitting the received PDU on the next hop using the determined resources.
2. The method of item 1, further comprising, on a condition that no available resources meet the determined next hop latency budget, dropping the PDU.
3. The method of item 1, wherein the next hop latency budget is equal to the expected latency minus an excess time parameter.
4. The method of item 1, wherein determining the expected latency for the next hop link is based on channel busyness ratio (CBR) measurements and a pre-configured mapping between CBR and the expected latency.
5. The method of item 1, wherein the dynamic determination of the next hop latency budget is based on an end-to-end latency budget.
6. The method of item 1, wherein the excess time indication indicates excess latency due to congestion on a previous hop.
7. The method of item 1, wherein the next hop latency budget depends on a packet delay budget.
8. The method of item 1, further comprising receiving a packet delay bit in a header of a packet from the source WTRU.
9. The method of item 1, further comprising monitoring a plurality of subchannels available for a transmission from the WTRU to a target WTRU to obtain the measure of channel load.
10. The method of item 1, wherein the end-to-end QoS is associated with a data rate.
11. A relay wireless transmit/receive unit (WTRU) configured to relay information from a source WTRU to a target WTRU and achieve an end-to-end quality of service (QoS), the relay WTRU comprising:
   a processor coupled to a transceiver configured to:
   receive a protocol data unit (PDU) and an excess time indication from the source WTRU;
   determine an expected latency for a next hop link based on a measure of channel load;
   dynamically determine a next hop latency budget based on the received excess time indication and the expected latency;
   determine resources for transmitting the received PDU based on the determined next hop latency budget; and
   on a condition that the resources are available, transmit the received PDU on the next hop using the determined resources.
12. The relay WTRU of item 11, wherein the processor coupled to the transceiver are further configured to drop the PDU on a condition that no available resources meet the determined next hop latency budget.
13. The relay WTRU of item 11, wherein the next hop latency budget is equal to the expected latency minus an excess time parameter.
14. The relay WTRU of item 11, wherein the expected latency for the next hop link is based on channel busyness ratio (CBR) measurements and a pre-configured mapping between CBR and the expected latency.
15. The relay WTRU of item 11, wherein the next hop latency budget is based on the end-to-end latency budget.
16. The relay WTRU of item 11, wherein the excess time indication indicates excess latency due to congestion on a previous hop.
17. The relay WTRU of item 11, wherein the next hop latency budget depends on a packet delay budget.
18. The relay WTRU of item 11, wherein the processor coupled to the transceiver are further configured to receive a packet delay bit in a header of a packet from the source WTRU.
19. The relay WTRU of item 11, wherein the processor coupled to the transceiver are further configured to monitor a plurality of subchannels available for a transmission from the WTRU to a target WTRU to obtain the measure of channel load.
20. The relay WTRU of item 11, wherein the end-to-end QoS is associated with a data rate.

## Claims

1. A remote wireless transmit/receive unit (WTRU) comprising:
a transceiver; and
a processor, wherein the transceiver and the processor are configured to:
receive a mapping configuration at an adaptation layer, the mapping configuration including information indicating a mapping of one or more end-to-end (E2E) radio bearer identifiers (IDs) to one or more egress PC5 radio link control (RLC) channels,
receive, from a higher layer, a protocol data unit (PDU),
select, based on the mapping configuration, one of the one or more egress PC5 RLC channels that is mapped to the one of the one or more E2E bearer,
append, to the PDU, an adaptation layer header comprising the E2E radio bearer ID and a remote WTRU ID corresponding to the remote WTRU, and
transmit, to a relay WTRU, via the selected egress PC5 RLC channel, the PDU with the appended adaptation layer header.

2. The remote WTRU of claim 1, wherein the mapping configuration is received from a NodeB via radio resource control (RRC) signaling.

3. The remote WTRU of claim 1 or claim 2, wherein the mapping configuration is received from the relay WTRU via PC5 signaling.

4. The remote WTRU of any of claims 1-3, wherein each of the one or more E2E bearer IDs is associated with a respective radio bearer between the remote WTRU and a NodeB.

5. The remote WTRU of any of claims 1-4, wherein each of the one or more egress PC5 RLC channels has an assigned priority, wherein each respective radio bearer between the remote WTRU and the NodeB has an associated QoS parameter, and wherein the assigned priority of each of the one or more egress PC5 RLC channels matches the associated QoS parameter of a corresponding radio bearer.

6. The remote WTRU of any of claims 1-5, wherein the mapping of the one or more E2E radio bearer IDs to the one or more egress PC5 RLC channels is a 1:1 mapping between each of the one or more E2E radio bearer IDs and each respective one of the one or more egress PC5 RLC channels.

7. The remote WTRU of any of claims 1-6, wherein the one or more E2E radio bearer IDs comprises a plurality of E2E radio bearer IDs, and wherein the mapping of the one or more E2E radio bearer IDs to the one or more egress PC5 RLC channels includes an N:1 mapping of the plurality of the E2E radio bearer IDs to one egress PC5 RLC channel.

8. The remote WTRU of any of claims 1-7, wherein the one or more egress PC5 RLC channels comprises a plurality of egress PC5 RLC channels, wherein the mapping of the one or more E2E radio bearer IDs to the one or more egress PC5 RLC channels includes a 1:N mapping between one E2E radio bearer ID and the plurality of egress PC5 RLC channels.

9. A method performed by a remote wireless transmit/receive unit (WTRU), the method comprising:
receiving a mapping configuration at an adaptation layer, the mapping configuration including information indicating a mapping of one or more end-to-end (E2E) radio bearer identifiers (IDs) to one or more egress PC5 radio link control (RLC) channels;
receiving, from a higher layer, a protocol data unit (PDU);
selecting, based on the mapping configuration, one of the one or more egress PC5 RLC channels that is mapped to the one of the one or more E2E bearer IDs;
appending, to the PDU, an adaptation layer header comprising the E2E radio bearer ID and a remote WTRU ID corresponding to the remote WTRU; and
transmitting, to a relay WTRU, via the selected egress PC5 RLC channel, the PDU with the appended adaptation layer header.

10. The method of claim 9, wherein the mapping configuration is received from the relay WTRU via PC5 signaling.

11. The method of claim 9 or claim 10, wherein each of the one or more E2E bearer IDs is associated with a respective radio bearer between the remote WTRU and a NodeB.

12. The method of any of claims 9-11, wherein each of the one or more egress PC5 RLC channels has an assigned priority, wherein each respective radio bearer between the remote WTRU and the NodeB has an associated QoS parameter, and wherein the assigned priority of each of the one or more egress PC5 RLC channels matches the associated QoS parameter of a corresponding radio bearer.

13. The method of any of claims 9-12, wherein the mapping of the one or more E2E radio bearer IDs to the one or more egress PC5 RLC channels is a 1:1 mapping between each of the one or more E2E radio bearer IDs and each respective one of the one or more egress PC5 RLC channels.

14. The method of any of claims 9-13, wherein the one or more E2E radio bearer IDs comprises a plurality of E2E radio bearer IDs, and wherein the mapping of the one or more E2E radio bearer IDs to the one or more egress PC5 RLC channels includes an N:1 mapping of the plurality of the E2E radio bearer IDs to one egress PC5 RLC channel.

15. The method of any of claims 9-14, wherein the one or more egress PC5 RLC channels comprises a plurality of egress PC5 RLC channels, wherein the mapping of the one or more E2E radio bearer IDs to the one or more egress PC5 RLC channels includes a 1:N mapping between one E2E radio bearer ID and the plurality of egress PC5 RLC channels.
